# EUROPEAN PATENT APPLICATION

(11) **EP 4 525 519 A1**
(43) Date of publication of application: **19.03.2025**
(21) Application number: 23820004.2
(22) Date of filing: 12.05.2023
(51) Int. Cl.: H04W 36/00, H04W 76/18

(54) **METHOD AND DEVICE FOR MANAGING RLF INFORMATION BY TERMINAL FOR SUPPORTING DUAL ACTIVATION PROTOCOL STACK IN NEXT GENERATION MOBILE COMMUNICATION SYSTEM**

(30) Priority: 10.06.2022 KR 20220070620
(71) Applicant: Samsung Electronics Co., Ltd., Suwon-si, Gyeonggi-do 16677 (KR)
(72) Inventor: JUNG, Sangyeob, Suwon-si, Gyeonggi-do 16677 (KR); AGIWAL, Anil, Suwon-si, Gyeonggi-do 16677 (KR)
(74) Representative: Gulde & Partner
(86) International application number: PCT/KR2023/006451
(87) International publication number: WO 2023/239068

(57) **Abstract**

The present disclosure relates to a 5G or 6G communication systems for supporting higher data transmission rates. Proposed in the present disclosure is a method and device for distinguishing whether handover failure information is information occurring due to a general handover failure or information occurring due to a DAPS handover failure. Another purpose of the present disclosure is to propose a method and device for managing a conflict if a plurality of gaps with the same priority exist.

## Description

### [Technical Field]

This disclosure relates to a terminal and a base station in a wireless communication system. More specifically, it relates to a terminal and base station operation in a Radio Link Failure (RLF) situation.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization **in** system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next generation distributed computing technology for implementing services at levels of complexity exceeding the limit of UE operation capability by utilizing ultra-high-performance communication and computing resources.

### [Disclosure of Invention]

### [Technical Problem]

The present disclosure is intended to solve the above problem and aims to provide a method for distinguishing whether a handover failure occurs due to a Dual Active Protocol Stack (DAPS) handover failure.

More specifically, the purpose of the present disclosure is to propose a method and device for distinguishing whether handover failure information stored in a VarRLF-Report variable is due to a general handover failure or a DAPS handover failure when a DAPS handover failure has occurred in a mobile communication system.

Another purpose of the present disclosure is to propose a method and device for managing a conflict if a plurality of gaps with the same priority exist.

### [Solution to Problem]

The present disclosure for solving the above problem is featured to provide a method, performed by a terminal in a wireless communication system, that comprises: receiving, from a base station, measurement configuration information including a plurality of measurement gaps having overlapping time axis and having the same priority; determining which measurement gap of the plurality of measurement gaps to apply; and performing a gap operation by applying the specific determined measurement gap.

The present disclosure for solving the above problem is featured to provide a method, performed by a base station in a wireless communication system, that comprises: generating, to a terminal, measurement configuration information including a plurality of measurement gaps having overlapping time axis and having the same priority; and transmitting, to the terminal, measurement configuration information including the plurality of measurement gaps, wherein a gap operation is performed based on a specific measurement gap of the plurality of measurement gaps.

The present disclosure for solving the above problem is featured to comprise, in a terminal in a wireless communication system, a transceiver for transmitting and receiving signal; and a control unit, wherein the control unit receives, from a base station, measurement configuration information including a plurality of measurement gaps having overlapping time axis and having the same priority; determines which measurement gap of the plurality of measurement gaps to apply; and performs a gap operation by applying the specific determined measurement gap.

The present disclosure for solving the above problem is featured to comprise, in a base station in a wireless communication system, a transceiver for transmitting and receiving signals; and a control unit, wherein the control unit generates, to a terminal, measurement configuration information including a plurality of measurement gaps having overlapping time axis and having the same priority; and transmitting, to the terminal, measurement configuration information including the plurality of measurement gaps, wherein a gap operation is performed based on a specific measurement gap of the plurality of measurement gaps.

### [Advantageous Effects of Invention]

According to an embodiment of the present disclosure, it is possible to distinguish whether the failure of the handover was caused by a general handover failure or a DAPS handover failure. More specifically, in the case of a DAPS handover failure, by not storing handover failure information in the Var-RLF Report variable or storing information to indicate this in the Var-RLF Report variable, it is possible to distinguish whether the handover failure occurred as a general handover failure or as a DAPS handover failure.

Furthermore, according to another embodiment of the present disclosure, it is possible to determine which of a plurality of measurement gaps having the same priority is to be applied. More specifically, if a plurality of gaps with the same priority exist, the gap operation may be performed according to instructions from the base station or by reflecting the preferred gap information of the terminal.

Advantageous effects obtainable from the present disclosure may not be limited to the above-mentioned effects, and other effects which are not mentioned may be clearly understood, through the following descriptions, by those skilled in the art to which the disclosure pertains.

### [Brief Description of Drawings]

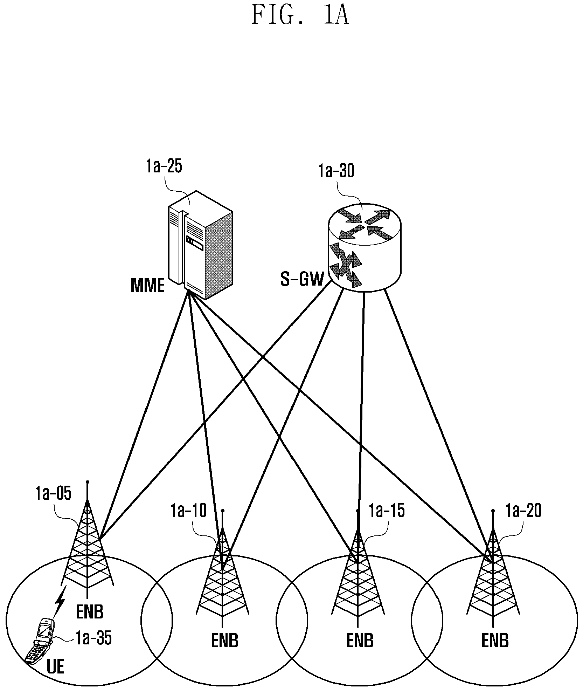

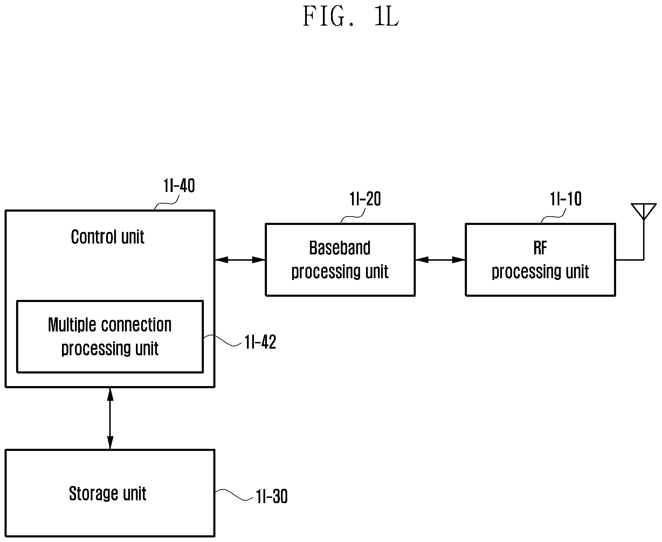

FIG. 1a is a diagram illustrating the structure of a long term evolution (LTE) system according to an embodiment of the present disclosure.

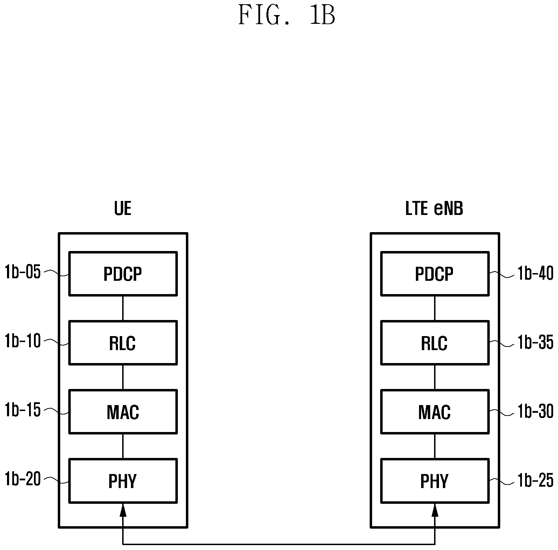

FIG. 1b is a diagram illustrating a wireless protocol structure in a long term evolution (LTE) system according to an embodiment of the present disclosure.

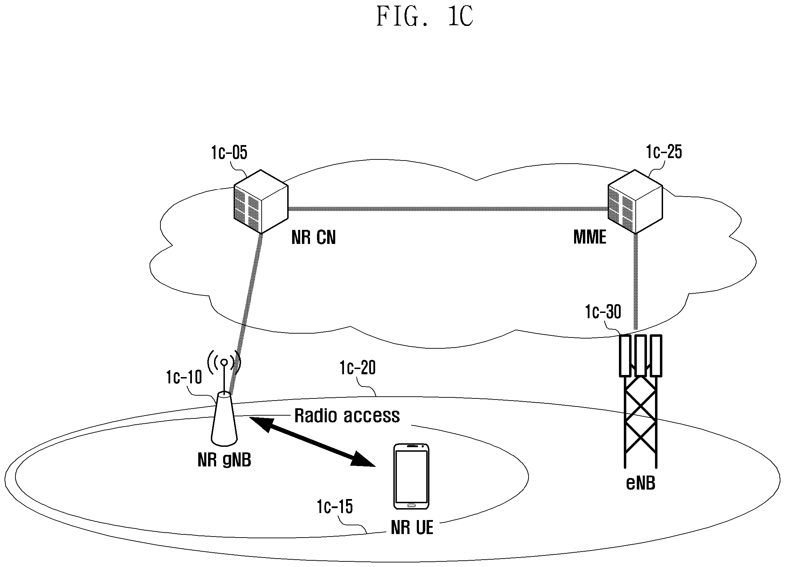

FIG. 1c is a diagram illustrating the structure of a next generation mobile communication system according to an embodiment of the present disclosure.

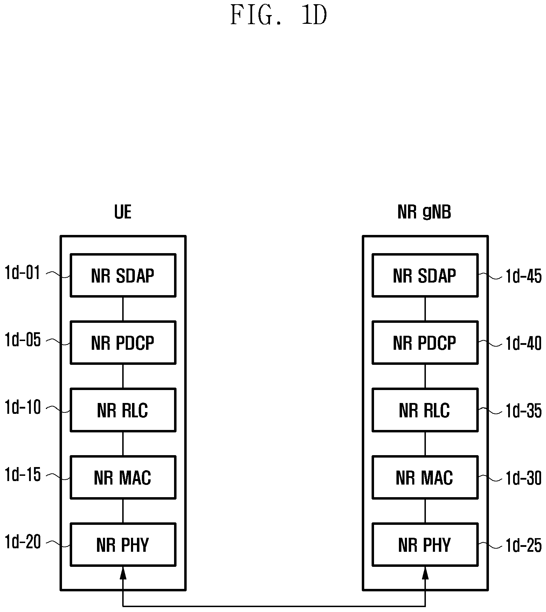

FIG. 1d is a diagram illustrating the wireless protocol structure of a next generation mobile communication system according to an embodiment of the present disclosure.

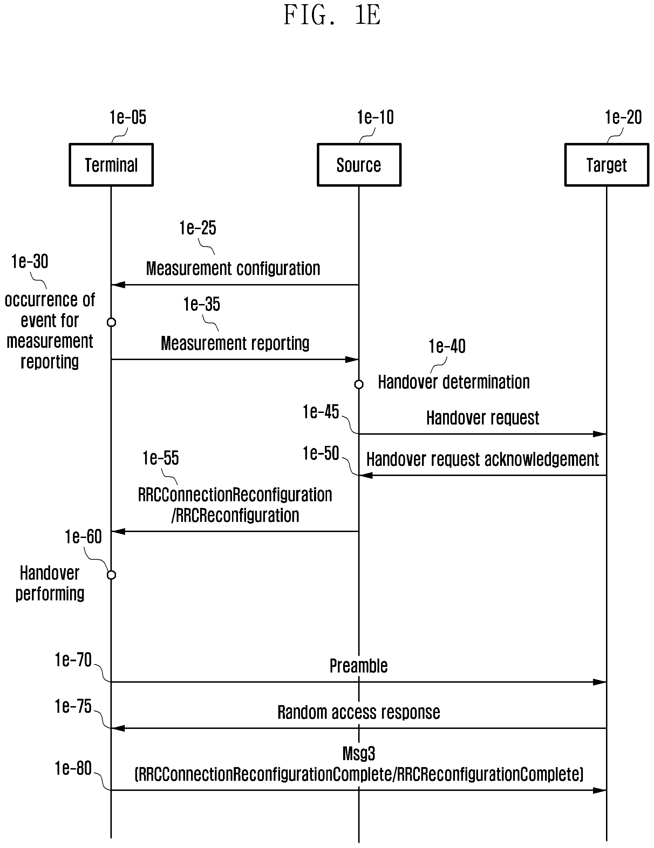

FIG. 1e is a flowchart of a process for performing a general handover operation in a mobile communication system according to an embodiment of the present disclosure.

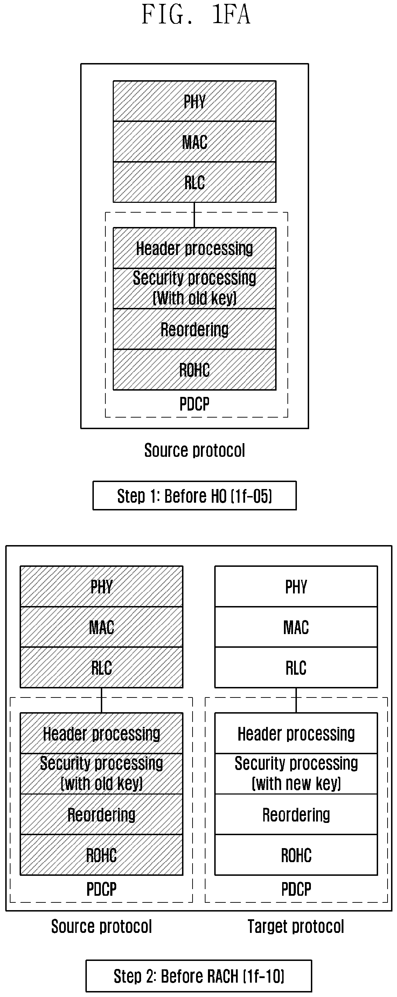

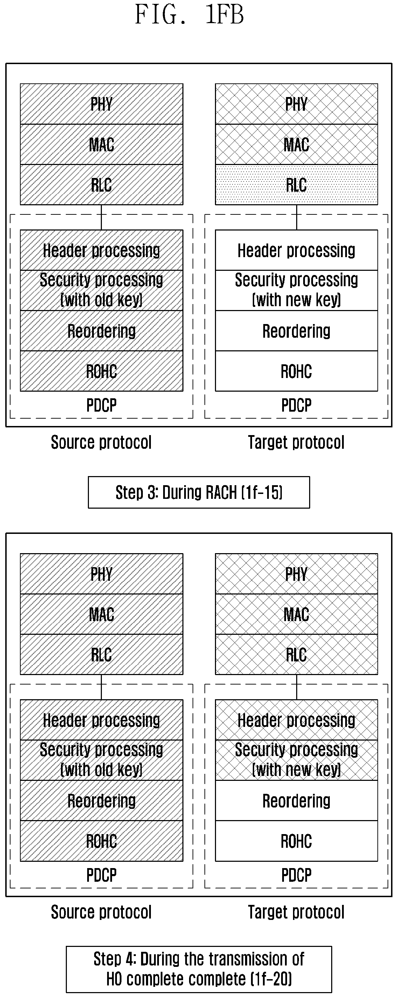

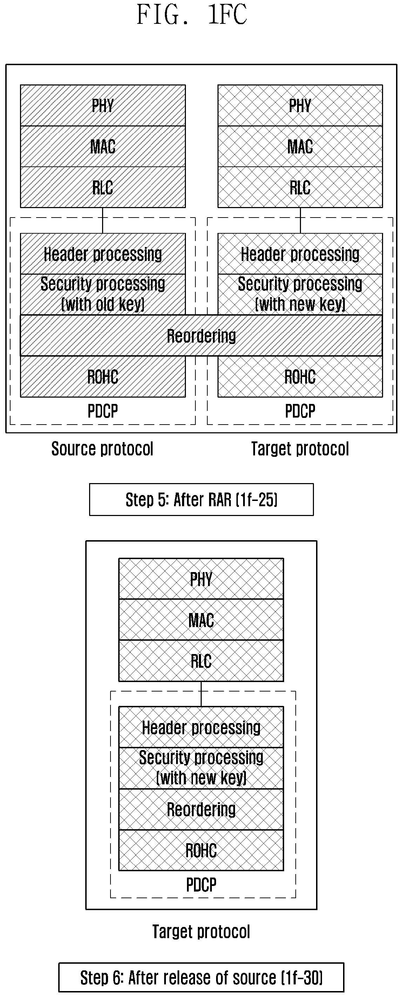

FIGS. 1fa, 1fb, and 1fc are diagrams illustrating a process of using a dual active protocol stack (DAPS) in the process of performing handover according to an embodiment of the present disclosure.

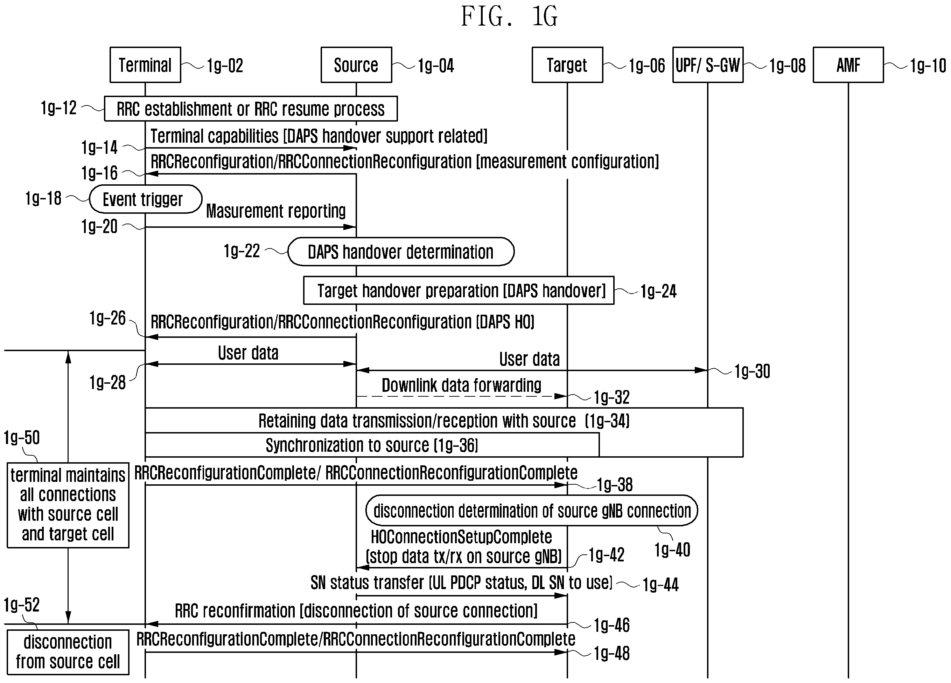

FIG. 1g is a flowchart of a process for performing a dual active protocol stack (DAPS) handover according to an embodiment of the present disclosure.

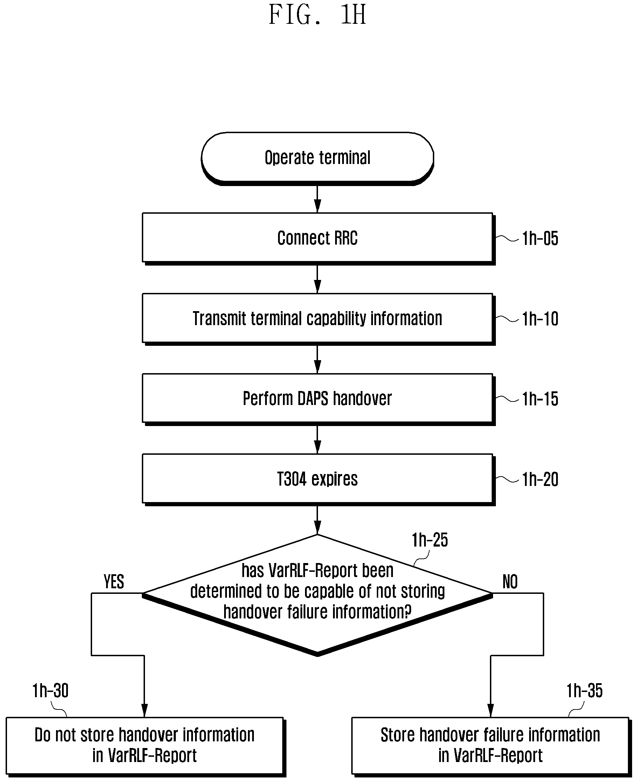

FIG. 1h is a flowchart of a terminal operation following a dual active protocol stack (DAPS) handover failure according to an embodiment of the present disclosure.

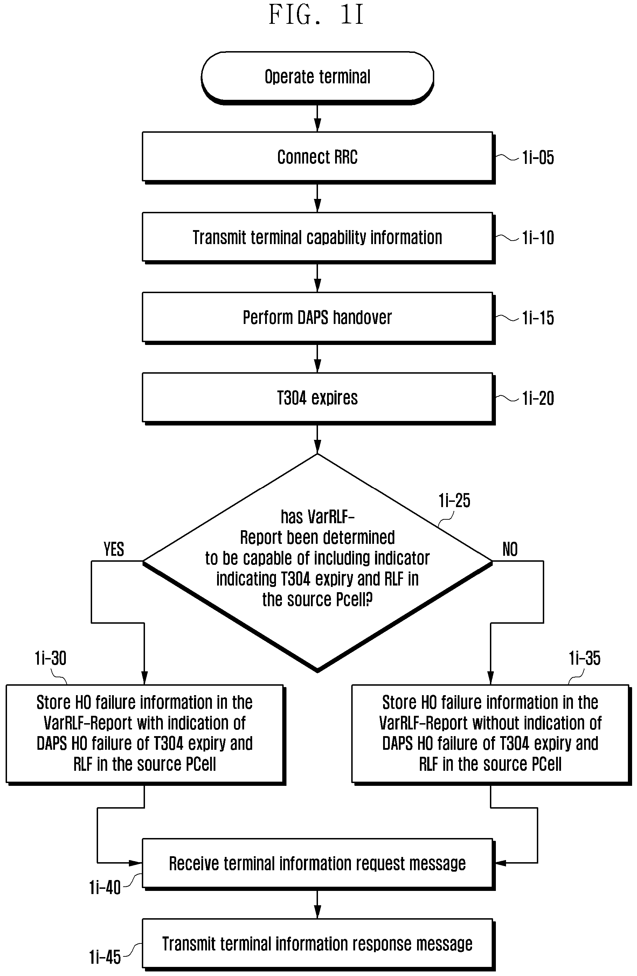

FIG. 1i is a flowchart of a terminal operation following a dual active protocol stack (DAPS) handover failure according to an embodiment of the present disclosure.

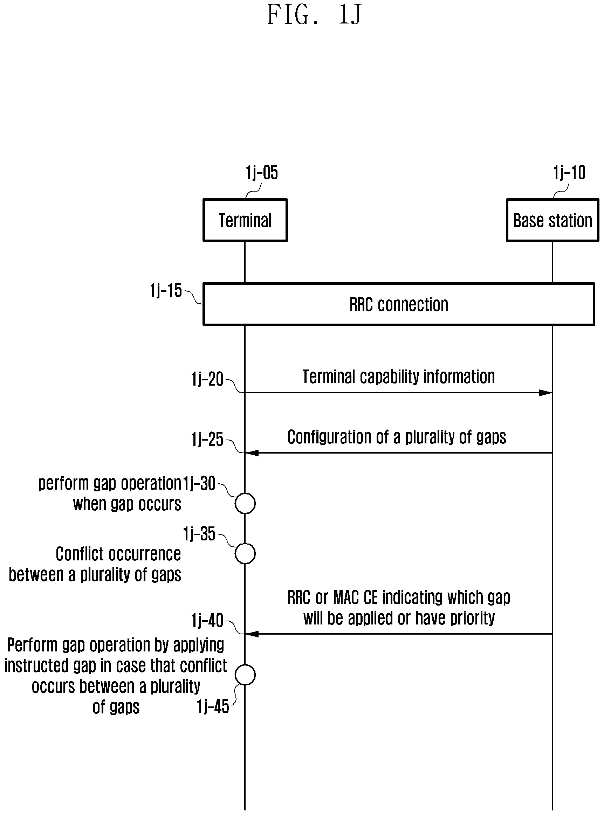

FIG. 1j is a flowchart of the operation of a terminal and a base station to manage a conflict if a plurality of gaps with the same priority exist according to an embodiment of the present disclosure.

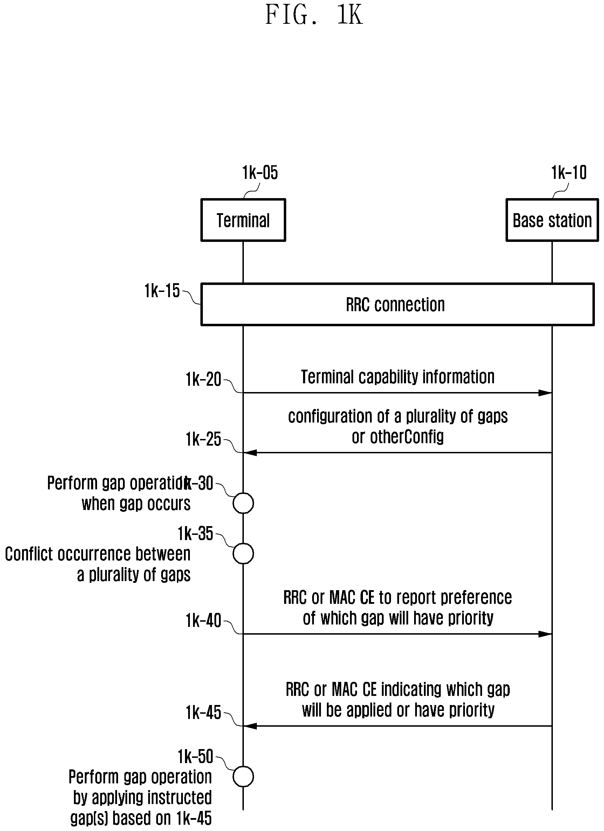

FIG. 1k is a flowchart of the operation of a terminal and a base station to manage a conflict if a plurality of gaps with the same priority exist according to another embodiment of the present disclosure.
FIG. 1I is a block diagram illustrating the internal structure of a terminal according to an embodiment of the present disclosure.

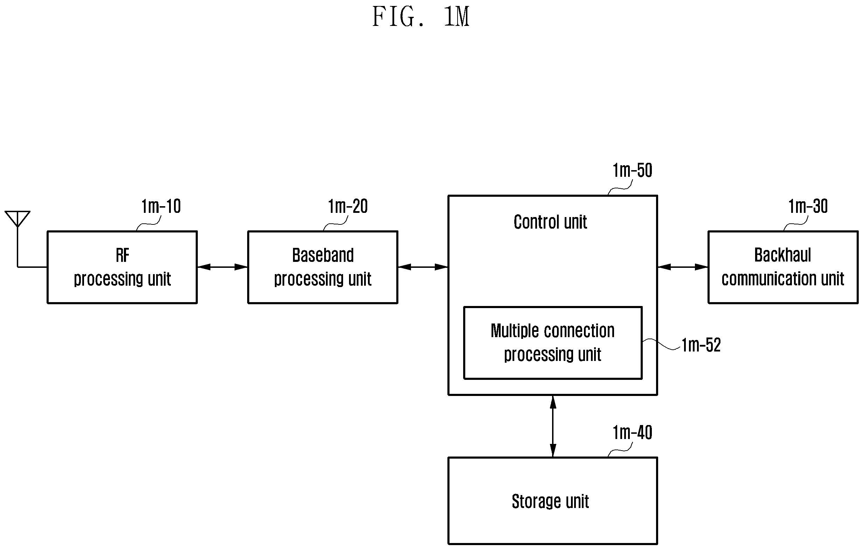

FIG. 1m is a block diagram illustrating the structure of a base station according to an embodiment of the present disclosure.

### [Mode for the Invention]

In describing the embodiments in this specification, description of technical content that is well known in the technical field to which the present invention belongs and that is not directly related to the present invention will be omitted. This is to convey the gist of the present invention more clearly without obscuring it by omitting unnecessary explanation.

For the same reason, some components in the attached drawings are exaggerated, omitted, or schematically shown. In addition, the size of each component does not entirely reflect its actual size. In each drawing, identical or corresponding components are assigned the same reference numbers.

The advantages and features of the present invention and methods for achieving them will become clear by reference to the embodiments described in detail below along with the accompanying drawings. However, the present invention is not limited to the embodiments disclosed below, but may be implemented in a variety of different forms and the present embodiments are merely provided to ensure that the disclosure of the present invention is complete and to fully inform the scope of the invention to persons of ordinary knowledge in the technical field to which the present invention pertains, and the present invention is only defined by the scope of the claims. Throughout the specification, the same reference numerals refer to the same components.

At this time, it will be understood that each block of the processing flowchart illustrations and combinations of the flowchart illustrations may be performed by computer program instructions. These computer program instructions may be mounted on a processor of a general purpose computer, a special purpose computer, or other programmable data processing equipment, such that the instructions, when executed by the processor of the computer or other programmable data processing equipment, create means for performing the functions described in the flowchart block(s). These computer program instructions may be stored in computer-usable or computer-readable memory that may be directed to a computer or other programmable data processing equipment to implement the functions in a specific manner, so that the instructions stored in the computer-usable or computer-readable memory may produce a manufactured item comprising instructional means for performing the functions described in the flowchart block(s). The computer program instructions may also be mounted on a computer or other programmable data processing equipment and a series of operational steps are performed on the computer or other programmable data processing equipment to create a computer-executable process, such that the instructions performing the computer or other programmable data processing equipment may also provide steps for performing the functions described in the flowchart block(s).

In addition, each block may represent a module, a segment, or a portion of code comprising one or more executable instructions for performing a specified logical function(s). It should also be noted that in some alternative embodiments, the functions recited in the blocks may occur out of sequence. For example, two blocks shown one after the other may in fact be performed substantially simultaneously, or the blocks may be performed in reverse order according to the functions they sometimes perform.

At this time, the term '~unit' used in the present embodiment refers to software or a hardware component such as an FPGA or an ASIC, which may perform any of the roles. However, '~unit' is not software or hardware specific. It may be configured to reside on an addressable storage medium, or it may be configured to execute one or more processors. Therefore, in one example, '~unit' includes components such as software components, object-oriented software components, class components, and task components, processes, functions, properties, procedures, subroutines, segments of program code, drivers, firmware, microcode, circuits, data, databases, data structures, tables, arrays, and variables. The functionality provided within the components and '~units' may be combined into fewer components and '~units', or further separated into additional components and '~units'. Furthermore, the components and '~units' may be implemented to play one or more CPUs within the device or the security multimedia card.

The principles of operation of the present invention will be described **in** detail with reference to the accompanying drawings. **In** describing the invention below, where it is deemed that a detailed description of the relevant disclosed features or configurations would unnecessarily obscure the essence of the invention, such detailed description will be omitted. **In** addition, the following terms are defined in view of their function in the present invention, which may vary depending on the user, operator's intent or custom. Therefore, the definitions should be read in light of the entire specification.

In describing the inventions below, where it is deemed that a detailed description of the relevant disclosed features or configurations would unnecessarily obscure the essence of the invention, such detailed description will be omitted. Embodiments of the present invention will now be described with reference to the accompanying drawings.

As used in the following description, terms for identifying access nodes, terms for referring to network entities, terms for referring to messages, terms for referring to interfaces between network entities, terms for referring to various identifying information, and terms for referring to various identifying information are exemplified for purposes of illustration. Accordingly, the present invention is not limited to the terms described herein, and other terms may be used to refer to objects having equivalent technical meaning.

For the purposes of the following description, the present invention uses terms and designations defined in the 3rd Generation Partnership Project Long Term Evolution (3GPP LTE) standards, or variations thereof. However, the present invention is not limited by such terms and designations and may be equally applicable to systems based on other standards. In the present invention, the term eNB may be used interchangeably with gNB for ease of description, i.e., a base station described as an eNB may also refer to a gNB.

FIG. 1a is a diagram illustrating the structure of a long term evolution (LTE) system according to an embodiment of the present disclosure.

With reference to FIG. 1a, as shown, a radio access network of a long term evolution (LTE) system is constituted of a next generation base station (Evolved Node B, hereinafter referred to as ENB, Node B or base station) 1a-05, 1a-10, 1a-15, and 1a-20, a Mobility Management Entity (MME) 1a-25 and a Serving-Gateway (S-GW) 1a-30. A user equipment (hereinafter referred to as UE or terminal) 1a-35 connects to the external network through the ENBs 1a-05 to 1a-20 and the S-GW 1a-30.

In FIG. 1a, the ENBs 1a-05 to 1a-20 correspond to the conventional node B in the UMTS system. The ENB is connected to the UE 1a-35 through a wireless channel and performs a more complex role than the traditional Node B.

In an LTE system, all user traffic, including real-time services such as Voice over IP (VoIP) over Internet Protocol, is serviced over a shared channel, so a device that aggregates status information such as buffer status, available transmission power status, channel status, etc. of UEs and schedules them is required, which is performed by ENBs 1a-05 to 1a-20.

One ENB typically controls multiple cells. To realize a transmission rate of, for example, 100 Mbps, an LTE system uses, for example, Orthogonal Frequency Division Multiplexing (hereinafter referred to as OFDM) as a radio access technology in a 20 MHz bandwidth. In addition, an Adaptive Modulation & Coding (AMC) method is applied to determine the modulation scheme and channel coding rate according to the channel status of the terminal.

The S-GW 1a-30 is a device that provides data bearers, and creates or removes data bearers under the control of the MME 1a-25. The MME is a device that handles various control functions as well as mobility management functions for the terminal and is connected to multiple base stations.

FIG. 1b is a diagram illustrating a wireless protocol structure in a long term evolution (LTE) system according to an embodiment of the present disclosure.

With reference to FIG. 1b, the radio protocols of the LTE system consist of Packet Data Convergence Protocol (PDCP) 1b-05 and 1b-40, Radio Link Control (RLC) 1b-10 and 1b-35, and Medium Access Control (MAC) 1b-15 and 1b-30 at the terminal and ENB, respectively. The Packet Data Convergence Protocol (PDCP) 1b-05 and 1b-40 is responsible for operations such as IP header compression/restoration. The main functions of PDCP are summarized as follows:
- Header compression and decompression: ROHC only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission function (Retransmission of PDCP SDUs at handover and, for split bearers in DC, of PDCP PDUs at PDCP data-recovery procedure, for RLC AM)
- Encryption and decryption function (Ciphering and deciphering)
- Timer-based SDU deletion function (Timer-based SDU discard in uplink.)

Radio Link Control (hereinafter referred to as RLC) 1b-10 and 1b-35 reconfigures the PDCP Packet Data Unit (PDU) to an appropriate size and performs ARQ operations, etc. The main functions of RLC are summarized as follows.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment function.

MAC (1b-15, 1b-30) is connected to several RLC layer devices configured in one terminal and performs operations of multiplexing RLC PDUs to MAC PDUs and demultiplexing RLC PDUs from MAC PDUs. The main functions of MAC are summarized as follows:
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification function
- Transport format selection function
- Padding function.

The physical layer 1b-20 and 1b-25 channel-codes and modulates the upper layer data, creates OFDM symbols and transmits them to the wireless channel, or demodulates and channel-decodes the OFDM symbols received through the wireless channel and delivers them to the upper layer.

FIG. 1c is a diagram illustrating the structure of a next generation mobile communication system according to an embodiment of the present disclosure.

With reference to FIG. 1c, as shown, a radio access network of a next generation mobile communication system (hereinafter NR or 2G) consists of a new radio node B (hereinafter NR gNB or NR base station) 1c-10 and a New Radio Core Network (NR CN) 1c-05 and 1c-05. The user terminal (New Radio User Equipment, NR UE or terminal) 1c-15 connects to the external network through the NR gNB 1c-10 and NR CN 1c-05.

In FIG. 1c, the NR gNB 1c-10 corresponds to an eNB (Evolved Node B) in a conventional LTE system. The NR gNB is connected to the NR UE 1c-15 by a wireless channel and may provide superior services than the conventional Node B. In next generation mobile communication systems, all user traffic is serviced over a shared channel, so a device that aggregates status information such as buffer status, available transmission power status, channel status, etc. of the UEs and performs scheduling is required, which is performed by the NR NB 1c-10. One NR gNB usually controls multiple cells. In order to realize ultra-high speed data transmission compared to the conventional LTE, it may have more than the conventional maximum bandwidth, and beamforming technology may be additionally applied using Orthogonal Frequency Division Multiplexing (OFDM) as a radio access technology. It also applies the Adaptive Modulation & Coding (AMC) method, which determines the modulation scheme and channel coding rate according to the channel conditions of the terminal. NR CN 1c-05 performs functions such as mobility support, bearer configuration, and QoS configuration. The NR CN is a device that performs mobility management functions for terminals as well as various control functions and is connected to multiple base stations. The next generation mobile communication system may also be interworked with the conventional LTE system, and the NR CN is connected to the MME 1c-25 through a network interface. The MME is connected to the eNB 1c-30, which is a conventional base station.

FIG. 1d is a diagram illustrating the wireless protocol structure of a next generation mobile communication system according to an embodiment of the present disclosure.

FIG. 1d is a diagram illustrating the wireless protocol structure of a next generation mobile communication system to which the present disclosure can be applied.

With reference to FIG. 1d, the wireless protocols of the next generation mobile communication system consist of NR SDAP 1d-01 and 1d-45, NR PDCP 1d-05 and 1d-40, NR RLC 1d-10 and 1d-35, and NR MAC 1d-15 and 1d-30 at the terminal and NR base station, respectively.

The main functions ofNR SDAP 1d-01 and 1d-45 may include some of the following functions:
- Transfer of user plane data
- Mapping between a QoS flow and a DRB for both DL and UL
- Marking QoS flow ID in both DL and UL packets for uplink and downlink
- Reflective QoS flow to DRB mapping for the UL SDAP PDUs.

For the SDAP layer device, the terminal may be configured by RRC message whether to use the header of the SDAP layer device or the function of the SDAP layer device for each PDCP layer device or each bearer or each logical channel, and in the case that the SDAP header is configured, the 1-bit indicator of the NAS QoS reflective configuration (NAS reflective QoS) and the 1-bit indicator of the AS QoS reflective configuration (AS reflective QoS) in the SDAP header may be used to instruct the terminal to update or reconfigure the mapping information for the QoS flow and data bearer of the uplink and downlink. The SDAP header may include QoS flow ID information indicating the QoS. The QoS information may be used as data processing priority, scheduling information, etc. to support seamless service.

The main functions of NR PDCP 1d-05 and 1d-40 may include some of the following functions:
- Header compression and decompression (ROHC only)
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Encryption and decryption function (Ciphering and deciphering)
- Timer-based SDU discard in uplink.

In the above, the reordering function of the NR PDCP device refers to the function of rearranging the PDCP PDUs received from the lower layer in order based on the PDCP sequence number (SN), and may include a function of delivering the data to the upper layer in the reordered order, or may include a function of delivering immediately without considering the order, may include a function of recording the lost PDCP PDUs by reordering, may include a function of reporting the status of the lost PDCP PDUs to the transmitting side, and may include a function of requesting retransmission of the lost PDCP PDUs.

NR RLC 1d-10 and 1d-35 may include some of the following functions.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection function
- Protocol error detection
- RLC SDU discard
- RLC re-establishment function

In the above, the in-sequence delivery function of the NR RLC device refers to the function of delivering RLC SDUs received from the lower layer to the upper layer in order, and may include the function of reassembling and delivering a single RLC SDU in the case that it was originally split into multiple RLC SDUs and received, may include a function of reordering received RLC PDUs based on RLC SN (sequence number) or PDCP SN (sequence number), may include a function of recording lost RLC PDUs in the reordered sequence, may include a function of reporting the status of lost RLC PDUs to the transmitting side, may include a function of requesting retransmission of the lost RLC PDUs, may include a function of delivering only the RLC SDUs prior to the lost RLC SDU, if any, to higher layers in order, or if a predetermined timer has expired for the lost RLC SDU, may include a function of delivering all RLC SDUs received before the timer started to the higher layer in order, or if a predetermined timer has expired for the lost RLC SDU, may include a function of delivering all RLC SDUs received to date to the higher layer in order even if there is a lost RLC SDU.

In addition, in the above, the NR RLC layer may also process the RLC PDUs in the order in which they are received (i.e., in order of arrival, regardless of sequence number) and deliver them to the PDCP device in an out-of-sequence delivery, or, in the case of segments, may receive segments that are stored in a buffer or will be received at a later time, reconstruct them into one complete RLC PDU, and process and deliver them to the PDCP device. The NR RLC layer may not include a concatenation function, and this function may be performed by the NR MAC layer or replaced by the multiplexing function of the NR MAC layer.

In the above, the out-of-sequence delivery function of the NR RLC device refers to the function of delivering RLC SDUs received from the lower layer directly to the upper layer regardless of the order, and may include the function of reassembling and delivering RLC SDU in the case that it was originally split into multiple RLC SDUs and received, and may include the function of storing the RLC SN or PDCP SN of the received RLC PDUs, sorting the order, and recording the lost RLC PDUs.

NR MAC 1d-15 and 1d-30 may be connected to multiple NR RLC layer devices configured in one terminal, and the main functions of NR MAC may include some of the following functions:
- Mapping between logical channels and transport channels
- Multiplexing/demultiplexing of MAC SDUs
- Scheduling information reporting function
- Error correction through HARQ
- Priority handling between logical channels of one UE
- Priority handling between UEs by means of dynamic scheduling
- MBMS service identification function
- Transport format selection function
- Padding.

The NR PHY layers 1d-20 and 1d-25 may perform operations of channel-coding and modulating upper layer data, creating OFDM symbols and transmitting them over the wireless channel, or demodulating and channel-decoding OFDM symbols received over the wireless channel and delivering them to the upper layer.

FIG. 1e is a flowchart of a process for performing a general handover operation in a mobile communication system according to an embodiment of the present disclosure.

The terminal 1e-05 receives an RRC message containing measurement configuration information from the source cell 1e-10 (1e-25).

The terminal 1e-05 applies the measurement configuration information to measure the signal quality of the serving cell and neighboring cells, and periodically or when a predetermined event occurs (1e-30), reports the collected cell measurement information to the source cell 1e-10 (1e-35).

The source cell 1e-10 determines whether to trigger a general handover operation based on the reported cell measurement information (1e-40). For example, if Event A3 (Neighbor becomes offset better than SpCell) is satisfied and cell measurement information is reported, the source cell 1e-10 may determine a general handover.

If it is decided to trigger the general handover, the source cell 1e-10 requests the general handover to one target cell 1e-20 through a predetermined inter-node message (1e-45).

The target cell 1e-20, which has received the request, accepts it and transmits handover configuration information or additional configuration information necessary for the general handover operation to the source cell 1e-10 (1e-50).

The source cell 1e-10 stores the handover configuration information or additional configuration information received from the target cell 1e-20 in a predetermined RRC message and transmits the RRC message (if the source cell is an NR cell, RRCReconfiguration message; if the source cell is an LTE cell, RRCConnectionReconfiguration message) to the terminal (1e-55).

The handover configuration information (e.g., ReconfigWithSync in NR; MobilityControlInfo in LTE) may include the ID of the target cell, frequency information, configuration information required for random access operation to the target cell (dedicated preamble information, dedicated radio resource information, etc.), transmission power information, C-RNTI information used in the target cell, T304 timer value, etc.

Upon receiving the handover configuration information, the terminal 1e-05 immediately starts a random access process to the target cell 1e-20 and starts the T304 timer (1e-60). At the same time, data transmission and reception with the serving cell is stopped.

In the case that the terminal 1e-05 receives the dedicated preamble in step 1e-55, it may transmit the dedicated preamble (1e-70). In the case that a dedicated preamble is not provided, one of the preambles used on a contention basis may be transmitted.

The target cell 1e-20 receiving the preamble transmits a random access response (RAR) message to the terminal 1e-05 (1e-75).

The terminal 1e-05 uses the UL grant information stored in the RAR and transmits msg3 to the target cell 1e-20 (1e-80).

The msg3 stores the RRCConnectionReconfigurationComplete message in the case of an LTE system and the RRCReconfigurationComplete message in the case of an NR system. When the random access process is successfully completed, it is considered that the general handover has been successfully completed, and the running T304 timer is stopped.

If the general handover is not successfully completed until the T304 timer expires, it is considered as a handover failure and the terminal may declare an RLF, store the handover failure information in the VarRLF-Report variable, revert back to the configuration used in the source primary cell (source PCell), and initiate the connection re-establishment procedure with the source PCell.

For reference, the terminal may store handover failure information in the VarRLF-Report variable as follows.

**[Table 1]**

| |
|---|
| The UE shall determine the content in the *VarRLF-Report* as follows: |
| 1> clear the information included in *VarRLF-Report* , if any; |
| 1> set the *plmn-IdentityList* to include the list of EPLMNs stored by the UE (ie includes the RPLMN); |
| 1> set the *measResultLastServCell* to include the cell level RSRP, RSRQ and the available SINR, of the source PCell (in case HO failure) or PCell (in case RLF) based on the available SSB and CSI-RS measurements collected up to the moment the UE detected failure; |
| 1> if the SS/PBCH block-based measurement quantities are available: |
| 2> set the *rsIndexResults* in *measResultLastServCell* to include all the available measurement quantities of the source PCell (in case HO failure) or PCell (in case RLF), ordered such that the highest SS/PBCH block RSRP is listed first if SS/PBCH block RSRP measurement results are available, otherwise the highest SS/PBCH block RSRQ is listed first if SS/PBCH block RSRQ measurement results are available, otherwise the highest SS/PBCH block SINR is listed first, based on the available SS/PBCH block based measurements collected up to the moment the UE detected failure; |
| 1> if the CSI-RS based measurement quantities are available: |
| 2> set the *rsIndexResults* in *measResultLastServCell* to include all the available measurement quantities of the source PCell (in case HO failure) or PCell (in case RLF), ordered such that the highest CSI-RS RSRP is listed first if CSI-RS RSRP measurement results are available, otherwise the highest CSI-RS RSRQ is listed first if CSI-RS RSRQ measurement results are available, otherwise the highest CSI-RS SINR is listed first, based |
| on the available CSI-RS based measurements collected up to the moment the UE detected failure; |
| 1> set the *ssbRLMConfigBitmap* and/or *csi-rsRLMConfigBitmap* in *measResultLastServCell* to include the radio link monitoring configuration of the source PCell (in case HO failure) or PCell (in case RLF), if available; |
| 1> for each of the configured *measObjectNR* in which measurements are available: |
| 2> if the SS/PBCH block-based measurement quantities are available: |
| 3> set the *measResultListNR* in *measResultNeighCells* to include all the available measurement quantities of the best measured cells, other than the source PCell (in case HO failure) or PCell (in case RLF), ordered such that the cell with highest SS/PBCH block RSRP is listed first if SS/PBCH block RSRP measurement results are available, otherwise the cell with highest SS/PBCH block RSRQ is listed first if SS/PBCH block RSRQ measurement results are available, otherwise the cell with highest SS/PBCH block SINR is listed first, based on the available SS/PBCH block based measurements collected up to the moment the UE detected failure; |
| 4> for each neighbor cell included, include the optional fields that are available; |
| 2> if the CSI-RS based measurement quantities are available: |
| 3> set the *measResultListNR* in *measResultNeighCells* to include all the available measurement quantities of the best measured cells, other than the source PCell (in case HO failure) or PCell (in case RLF), ordered such that the cell with highest CSI-RS RSRP is listed first if CSI-RS RSRP measurement results are available, otherwise the cell with highest CSI-RS RSRQ is listed first if CSI-RS RSRQ measurement results are available, otherwise the cell with highest CSI-RS SINR is listed first, based on the available CSI-RS based measurements collected up to the moment the UE detected radio link failure; |
| 4> for each neighbor cell included, include the optional fields that are available; |
| 1> for each of the configured EUTRA frequencies **in** which mea surements are available; |
| 2> set the *measResultListEUTRA* in *measResultNeighCells* to include the best measured cells ordered such that the cell with highest RSRP is listed first if RSRP measurement results are available, otherwise the cell with highest RSRQ is listed first, and based on measurements collected up to the moment the UE detected failure; |
| 3> for each neighbor cell included, include the optional fields that are available; |
| NOTE 1: The measured quantities are filtered by the L3 filter as configured **in** the mobility measu rement configuration. The measurements are based on the time domain measurement resource restriction, if configured. Blacklisted cells are not required to be reported. |
| 1> set the *c-RNTI* to the C-RNTI used **in** the source PCell (in case HO failure) or PCell (in case RLF); |
| 1> if the failure is detected due to reconfiguration with sync failure as described **in** 5.3.5.8.3, set the fields in *VarRLF-report* as follows: |
| 2> set the *connectionFailureType* to *hof* ; |
| 2> set the *nrFailedPCellId* in *failedPCellId* to the global cell identity and tracking area code, if available, and otherwise to the physical cell identity and carrier frequency of the target PCell of the failed handover; |
| 2> include *nrPreviousCell* in *previousPCellId* and set it to the global cell identity and tracking area code of the PCell where the last *RRCReconfiguration* message including *reconfigurationWithSync* was received; |
| 2> set the *timeConnFailure* to the elapsed time since reception of the last *RRCReconfiguration* message including the *reconfigurationWithSync* ; |
| 1> else if the failure i s detected due to Mobility from NR failure as described in 5.4.3.5, set the fields **in** *VarRLF-report* as follows: |
| 2> set the *connectionFailureType* to *hof* ; |
| 2> if last *MobilityFromNRCommand* concerned a failed inter-RAT handover from NR to E-UTRA and if the UE supports Radio Link Failure Report for Inter-RAT MRO EUTRA (NR to EUTRA): |
| 3> set the *eutraFailedPCellId* in *failedPCellId* to the global cell identity and tracking area code, if available, and otherwise to the physical cell identity and carrier frequency of the target PCell of the failed handover; |
| 2> include *nrPreviousCell* in *previousPCellId* and set it to the global cell identity and tracking area code of the PCell where the last *MobilityFromNRCommand* message was received; |
| 2> set the *timeConnFailure* to the elapsed time since reception of the last *MobilityFromNRCommand* message; |
| 1> else if the failure is detected due to radio link failure as described in 5.3.10.3, set the fields in *VarRLF-report* as follows: |
| 2> set the *connectionFailureType* to *rlf* ; |
| 2> set the *rlf-Cause* to the trigger for detecting radio link failure in accordance with clause 5.3.10.4; |
| 2> set the *nrFailedPCellId* in *failedPCellId* to the global cell identity and the tracking area code, if available, and otherwise to the physical cell identity and carrier frequency of the PCell where radio link failure is detected; |
| 2> if an *RRCReconfiguration* message including the *reconfigurationWithSync* was received before the connection failure: |
| 3> if the last *RRCReconfiguration* message including the *reconfigurationWithSync* concerned an intra NR handover: |
| 4> include the *nrPreviousCell* in *previousPCellId* and set it to the global cell identity and the tracking area code of the PCell where the last *RRCReconfiguration* message including *reconfigurationWithSync* was received; |
| 4> set the *timeConnFailure* to the elapsed time since reception of the last *RRCReconfiguration* message including the *reconfigurationWithSync* ; |
| 3> else if the last *RRCReconfiguration* message including the *reconfigurationWithSync* concerned a handover to NR from E-UTRA and if the UE supports Radio Link Failure Report for Inter-RAT MRO EUTRA: |
| 4> include the *eutraPreviousCell* in *previousPCellId* and set it to the global cell identity and the tracking area code of the E-UTRA PCell where the last *RRCReconfiguration* message including *reconfigurationWithSync* was received embedded in E-UTRA RRC message *MobilityFromEUTRACommand* message as specified in TS 36.331 [ 10] clause 5.4.3.3; |
| 4> set the *timeConnFailure* to the elapsed time since reception of the last *RRCReconfiguration* message including the *reconfigurationWithSync* embedded in E-UTRA RRC message *MobilityFromEUTRACommand* message as specified in TS 36.331 [10] clause 5.4.3.3; |
| 1> if *connectionFailureType* is *rlf* and the *rlf-Cause* is set to *randomAccessProblem* or *beamFailureRecoveryFailure* ; or |
| 1> if *connectionFailureType* is *hof* and if the failed handover is an intra-RAT handover: |
| 2> set the *ra-InformationCommon* to include the random-access related information as described in subclause 5.7.10.5; |
| 1> if available, set the *locationInfo* as in 5.3.3.7. |
| The UE may discard the radio link failure information or handover failure information, ie release the UE variable *VarRLF-Report ,* 48 hours after the radio link failure/handover failure is detected. |

FIG. 1f is a diagram illustrating a process of using a dual active protocol stack (DAPS) in the process of performing handover according to an embodiment of the present disclosure.

When performing the general handover, the terminal stops transmitting and receiving data to and from the source cell when receiving the handover configuration information, and starts transmitting and receiving data to and from the target cell after the handover process is successful. Therefore, an interruption time occurs during the time interval during which the data transmission and reception cannot be performed. If the terminal has a dual active protocol stack, data transmission and reception with the source cell during the time interval may be maintained.

In this disclosure, a handover considering the above terminal capabilities is referred to as a dual active protocol stack (DAPS) handover. When a DAPS handover is established, the terminal may simultaneously receive downlink data from the source cell and the target cell. However, simultaneous uplink data transmission to the source cell and target cell may be possible only when certain conditions are met due to insufficient terminal transmission power or signal interference.

To minimize terminal complexity, uplink data transmission is possible only through one link while DAPS handover is performed, and the uplink where data transmission occurs may be switched from the source cell to the target cell at a specific point in time.

The activation state and terminal operation of the dual protocol stack corresponding to the source cell and target cell are different at each major specific point in time.

Before handover is performed (1f-05), the terminal uses only the protocol stack corresponding to the source cell.

After the DAPS handover configuration information is provided to the terminal and before the RACH to the target cell is performed (1f-10), the terminal configures the protocol stack corresponding to the target cell when the DAPS handover configuration information is provided to the terminal through the RRCReconfiguration message. However, the terminal still utilizes only the protocol stack corresponding to the source cell. The protocol stack corresponding to the target cell may be inactive.

During the random access channel (RACH) performance interval (1f-15), when the random access channel (RACH) operation is initiated, at least the PHY layer and the media access control (MAC) layer in the protocol stack corresponding to the target cell are activated to perform the RACH operation. At this time, the terminal still maintains data transmission and reception with the source cell.

When the time comes for the terminal to transmit the HO success completion message to the target cell 1f-20, the terminal shall have at least some functions of the PHY layer, the MAC layer, the RLC layer, and the packet data convergence control (PDCP) layer enabled in the protocol stack corresponding to the target cell and shall process the HO success completion message as a signaling radio bearer. The terminal may transmit uplink data to the source cell at least until the HO successful completion message is transmitted to the target cell.

After the terminal receives the RAR from the target cell (1f-25), both of the dual active protocol stacks are activated. The terminal maintains data transmission and reception with the source cell until a certain point in time after receipt of the RAR. Furthermore, the point in time at which the terminal can maintain downlink data reception with the source cell and the point in time at which the terminal can maintain uplink data transmission may be different. The terminal may transmit uplink data to the source cell until it transmits the HO successful completion message to the target cell, but may continue to receive downlink data thereafter.

After the terminal releases the source cell 1f-30, the protocol stack corresponding to the source cell is also released. From now on, the terminal uses only the protocol stack corresponding to the target cell.

FIG. 1g is a flowchart of a process for performing a dual active protocol stack (DAPS) handover according to an embodiment of the present disclosure.

The terminal 1g-02 may switch to connected mode with the source base station 1g-04 through the RRC establishment or RRC resume process (1g-12).

A terminal with DAPS handover support capability may report to the source base station 1g-04 that it supports DAPS handover (1g-14).

The source base station 1g-04 may configure the measurement configuration to the terminal 1g-02 using RRC connection reconfiguration messages (RRCReconfiguration in NR, RRCConnectionReconfiguration in LTE) for mobility support purposes (1g-16).

When a measurement report event is triggered (1g-18), the terminal 1g-02 may report a measurement report to the base station 1g-04 (1g-20).

The source base station 1g-04, which has received the measurement report, may decide to perform a handover with a specific neighboring base station based on the cell measurement information included in the measurement report (1g-22).

In addition, the source base station 1g-04 may transmit a handover request message to the target base station 1g-06, and the target base station 1g-06 may transmit a response message to the source base station 1g-04 (1g-24).

The handover request message may include an indicator indicating that the terminal will perform DAPS handover. The response message may include handover configuration information or additional configuration information for the terminal.

The source base station 1g-04 may store the handover configuration information or additional configuration information received from the target base station 1g-06 in a predetermined RRC message, and may transmit the predetermined RRC message (RRCReconfiguration message if the source base station is an NR cell; RRCConnectionReconfiguration message if the source base station is an LTE cell) to the terminal (1g-26). The handover configuration information (e.g., ReconfigWithSync in NR; MobilityControlInfo in LTE) may include the ID of the target cell, frequency information, configuration information required for random access operation to the target cell (dedicated preamble information, dedicated radio resource information, etc.), transmission power information, C-RNTI information used by the target cell, T304 timer value or T304-like timer value, etc.

The terminal 1g-02, which has received the handover configuration information, may run a T304 or T304-like timer and perform random access to the target cell 1g-06 (1g- 36).

When the timer expires, if the terminal has not successfully transmitted an RRC connection reconfiguration message to the target cell 1g-06, the handover may be considered to have failed. If the terminal considers the handover to have failed (when the T304 timer expires and any DAPS bearer is configured to the terminal) and a radio link failure is detected at the source base station, the terminal may revert back to the configuration used in the source PCell/base station, store the handover failure information in the VarRLF-Report variable, and initiate a procedure to re-establish the RRC connection with the source cell.

For reference, the method for the terminal to store handover failure information in the VarRLF-Report variable may follow the above-described embodiment.

The terminal may consider the handover to have failed (if the T304 timer has expired and any DAPS bearer has been configured on the terminal) and transmit a failureInformation message with daps-failure to the source base station to report the failure of the DAPS handover, if no radio link failure has been detected by the source base station.

In step 1g-26, the RRC connection reconfiguration message may include an indicator indicating that this is a handover using DAPS. The terminal 1g-02, which has received the indicator, may maintain data transmission and reception with the source cell until a certain point even after transmitting the first preamble to the target cell 1g-06 (1g-28 and 1g -34).

Terminal user data transmitted and received through the source cell may be delivered to the end user through UPF/S-WG 1g-08 (1g-30).

The source cell 1g-04 may forward the downlink data of the terminal to the target cell 1g-06 (1g-32). This is because the signal quality of the link with the source cell may rapidly deteriorate, making it difficult to transmit and receive data.

When the terminal 1g-02 receives a random access response message from the target cell 1g-06, it may transmit an RRC connection reconfiguration completion message (RRCReconfiguratonComplete message in NR, RRCConnectionReconfigurationComplete message in LTE) to the target cell 1g-06 (1g-38).

If the RRC message is successfully transmitted, it means that handover to the target cell has been successfully completed. The terminal 1g-02 performs uplink data transmission with the source cell until the RRC message is successfully transmitted.

When the terminal 1g-02 receives a UL grant (uplink scheduling information) from the target cell 1g-06, it may switch uplink to the target cell.

The target cell 1g-06, which has received the RRC connection reconfiguration complete message, may decide to disconnect the terminal from the source cell (1g-40).

The target cell 1g-06 may request the source cell 1g-04 to disconnect (1g-42).

The source cell 1g-04 that has received the request may stop transmitting and receiving data to and from the terminal 1g-02. The source cell 1g-04 may provide SN status transfer to the target cell 1g-06 (1g-44). The information may be used to smoothly transmit and receive data between the target cell and the terminal.

The target cell 1g-06 may instruct the terminal 1g-02 to disconnect from the source cell using a predetermined RRC message (1g-46).

The terminal 1g-02 that has received the message may disconnect from the source cell (1g-52) and transmit a response message to the message (1g-48). As another option, the terminal may implicitly disconnect from the source cell when it successfully transmits an RRC connection reconfiguration completion message to the target cell or after a predetermined offset time.

In this embodiment, if a radio link failure with the source cell is detected during DAPS HO and handover from the target cell fails (i.e., T304 timer expires), the terminal may store handover failure information in the VarRLF-Report variable. At this time, the base station cannot distinguish whether the handover failure information stored in the VarRLF-Report variable is information that occurred due to a general handover failure or information that occurred due to a DAPS handover failure.

FIG. 1h is a flowchart of a terminal operation following a dual active protocol stack (DAPS) handover failure according to an embodiment of the present disclosure.

With reference to FIG. 1h, the terminal may be in RRC connection mode (1h-05).

In step 1h-10, the terminal may transmit a terminal capability information message (UECapabilityInformation) to the source base station. The message may report support for DAPS handover to the source base station. In the present disclosure, the message may include an indicator that handover failure information may not be stored in the Var-RLF report variable when the following DAPS handover fails.
- When the T304 timer associated with the target cell expires and radio link failure occurs in the source PCell

In step 1h-15, the terminal may perform DAPS HO. That is, the terminal has a daps bearer configured by the base station.

In step 1h-20, the terminal may determine that the T304 timer associated with the target cell has expired and a radio link failure has occurred (or been detected) in the source PCell.

In step 1h-25, the terminal may determine, as described above in step 1h-10, whether the target cell has the ability not to store the handover failure information in the Var-RLF report variable when the T304 timer associated with the target cell expires and a radio link failure occurs in the source PCell.

In step 1h-30, the terminal may, when the T304 timer associated with the target cell expires and a radio link failure occurs in the source PCell, reapply the configuration information used by the source PCell and initiate a connection re-establishment procedure, provided that the terminal has the ability not to store the handover failure information in the Var-RLF Report variable. In this case, the terminal may not store the handover failure information in the Var-RLF Report variable.

In step 1h-35, if the terminal does not have the ability not to store the handover failure information in the Var-RLF-Report variable when the T304 timer associated with the target cell expires and a radio link failure occurs in the source PCell, the terminal may reapply the configuration information used by the source PCell, store the handover failure information in the VarRLF-Report variable, and initiate a connection re-establishment procedure.

In this disclosure, the terminal may not report RLF information to the base station if the T304 timer expires during a DAPS HO failure and a radio link failure occurs in the source PCell. On the other hand, if a general HO failure occurs, the terminal may report RLF information to the base station.

FIG. 1i is a flowchart of a terminal operation following a dual active protocol stack (DAPS) handover failure according to an embodiment of the present disclosure.

With reference to FIG. 1i, the terminal may be in RRC connected mode (11-05).

In step 1i-10, the terminal may transmit a terminal capability information message (UECapabilityInformation) to the source base station. The message may report to the source base station that it supports DAPS handover. In the present disclosure, the message may include information or an indicator that the source base station has the ability to include information in the Var-RLF report variable to indicate the following DAPS handover failure. Alternatively, in the present disclosure the message may include an indicator that the message has the ability to include information in a predetermined RRC message (e.g., RRCReestablishmentComplete) to indicate the following DAPS handover failure.
- When the T304 timer associated with the target cell expires and radio link failure occurs in the source PCell

In step 1i-15, the terminal may perform DAPS HO. That is, the terminal has a daps bearer configured by the base station.

In step 1i-20, the terminal may determine that the T304 timer associated with the target cell has expired and a radio link failure has occurred (or been detected) in the source PCell.

In step 1i-25, the terminal may determine, as described above in step 1i-10, that when the T304 timer associated with the target cell expires and a radio link failure occurs in the source PCell, the terminal has the ability to include information to indicate this in the Var-RLF report variable or to include an indicator to indicate this in a predetermined RRC message.

In steps 1i-30, the terminal may store information to indicate in the Var-RLF Report variable when the T304 timer associated with the target cell expires and a radio link failure occurs in the source Pcell. That is, an indicator or corresponding daps-failure information to indicate that the T304 timer has expired, and a radio link failure has occurred in the source Pcell may be included. The terminal may reapply the configuration information used by the source PCell and initiate a connection re-establishment procedure. The terminal may also transmit a predetermined RRC message (e.g., RRCReestablishmentComplete) to the base station including an indicator to indicate that the T304 timer has expired, and a radio link failure has occurred on the source PCell.

In steps 1i-35, when the T304 timer associated with the target cell expires and a radio link failure occurs in the source Pcell, if the terminal is not capable of storing information to indicate this in the Var-RLF-Report variable or fails to include an indicator to indicate this in the predetermined RRC message, it may reapply the configuration information used by the source PCell, store the handover failure information in the Var-RLF-Report variable, and initiate a connection re-establishment procedure, as shown in the embodiment of FIG. 1e.

In step 1i-40, the terminal may receive a UEInformationRequest message from the base station. The message may include an indicator to report an RLF report (rlf- ReportReq).

In step 1i-45, the terminal may transmit a UEInformationResponse message including RLF information to the base station. The message may contain information from the VarRLF-Report.

FIG. 1j is a flowchart of the operation of a terminal and a base station to manage a conflict if a plurality of gaps with the same priority exist according to an embodiment of the present disclosure.

With reference to FIG. 1j, in step 1j-15, the terminal (UE) 1j-05 may establish an RRC connection with the base station 1j-10 and be in RRC connection mode (1j-15).

In step 1j-20, the terminal 1j-05 may transmit a UECapabilityInformation message to the base station 1j-10. The message may include at least one of the following:
- Indicator that the same priority may be supported for one or more gap configuration information
- Indicator that when one or more gap configuration information with the same priority overlaps (collides) on the time axis, specific gap configuration information may be applied as a priority according to the instructions of the base station.
- Indicator that when one or more gap configuration information with different priorities collides on the time axis, specific gap configuration information may be applied as a priority according to the instructions of the base station.

In step 1j-25, the base station 1j-10 may transmit a predetermined RRC message (e.g., RRCResume or RRCReconfiguration) containing one or more gap configuration information to the terminal 1j-05.

The gap configuration information may refer to gap configuration information that may be configured for a terminal, such as measurement gap configuration information, Multi-Universal Subscriber Identity Module (MUSIM) gap configuration information used by a terminal supporting a MUSIM, positioning gap configuration information, non-terrestrial network gap configuration information used by a terminal supporting a satellite service, etc. Of course, the gap configuration information may not be limited to the above gap configuration information mentioned in the present disclosure. For example, the gap configuration information may have an ASN.1 structure such as the following.
- Measurement gap configuration information or position measurement gap configuration information

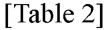

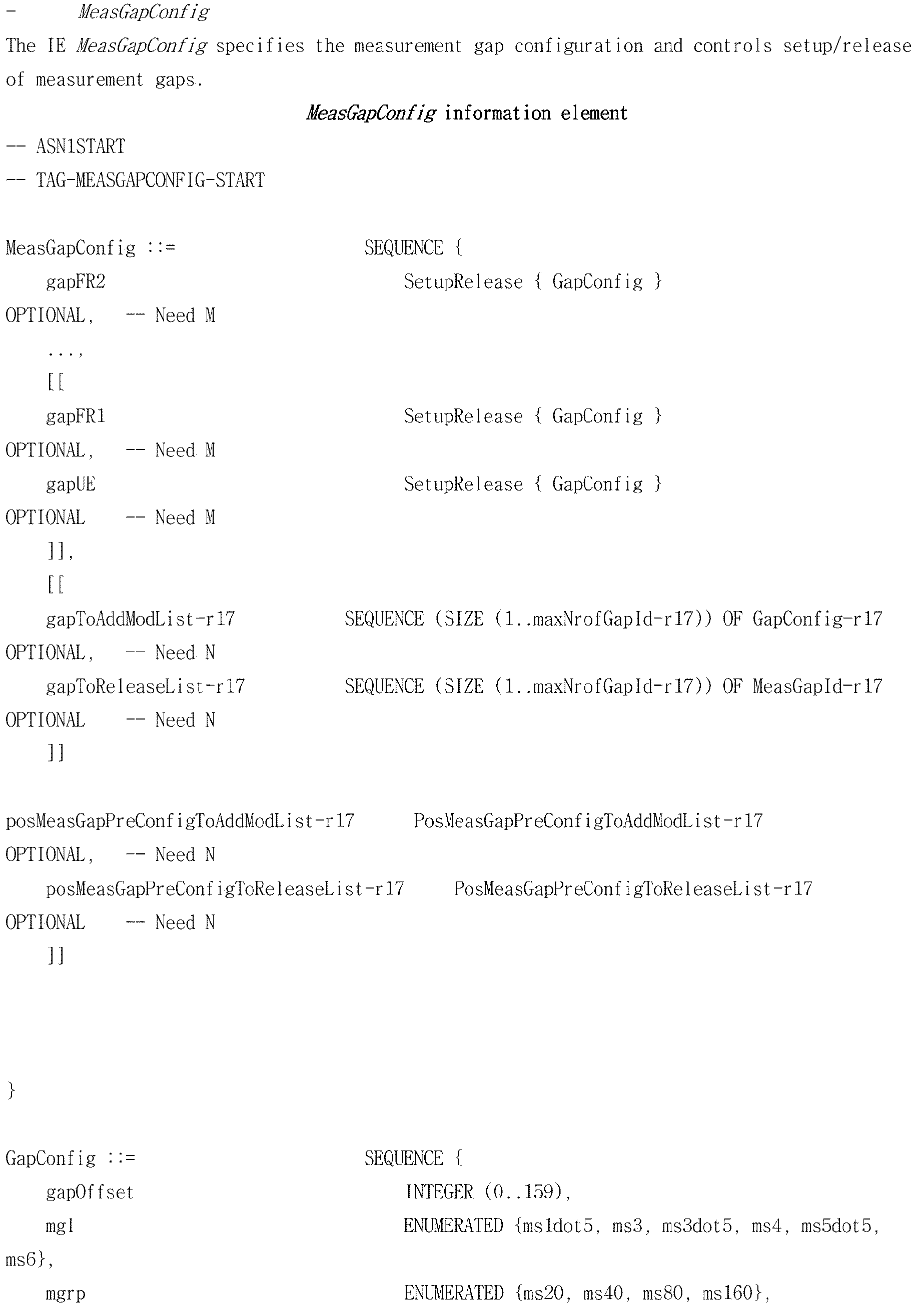

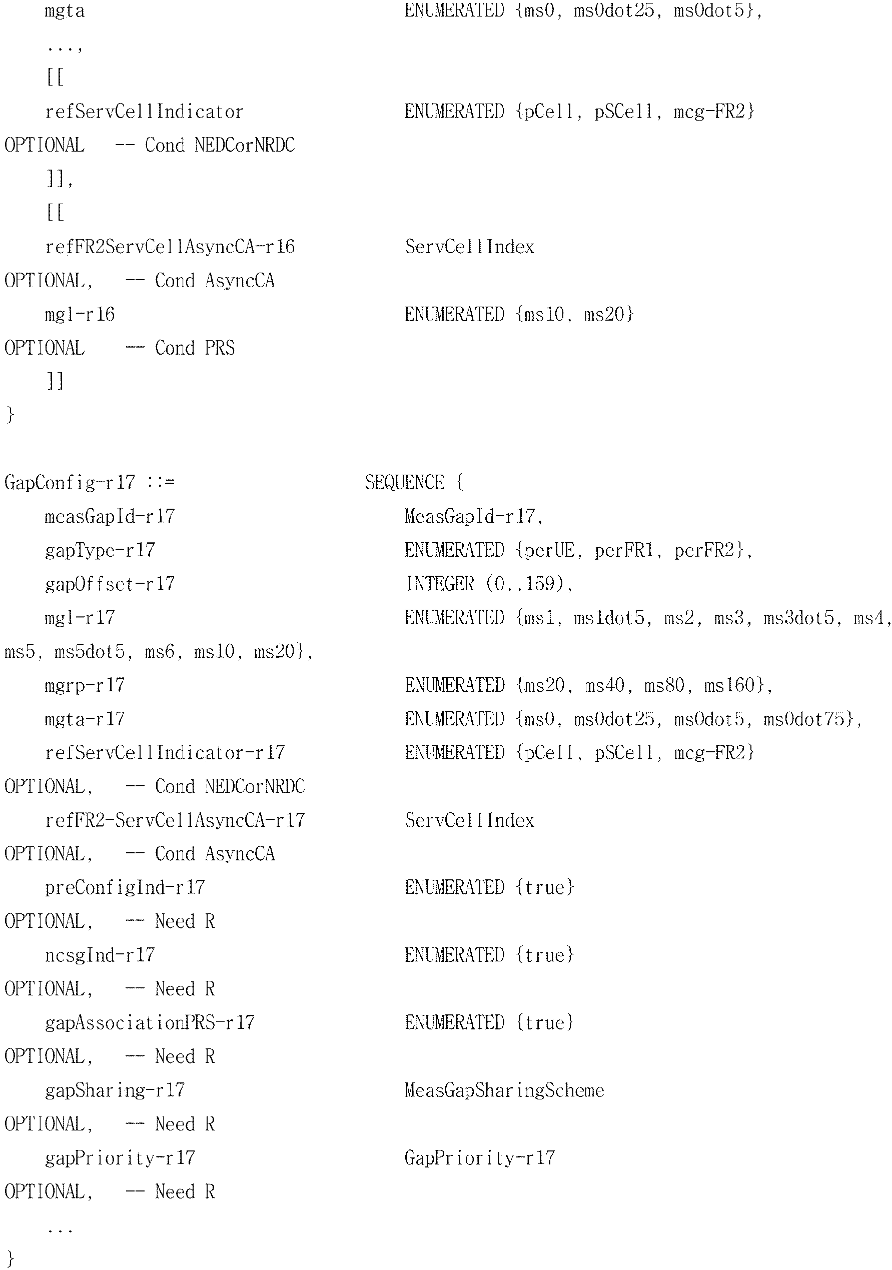

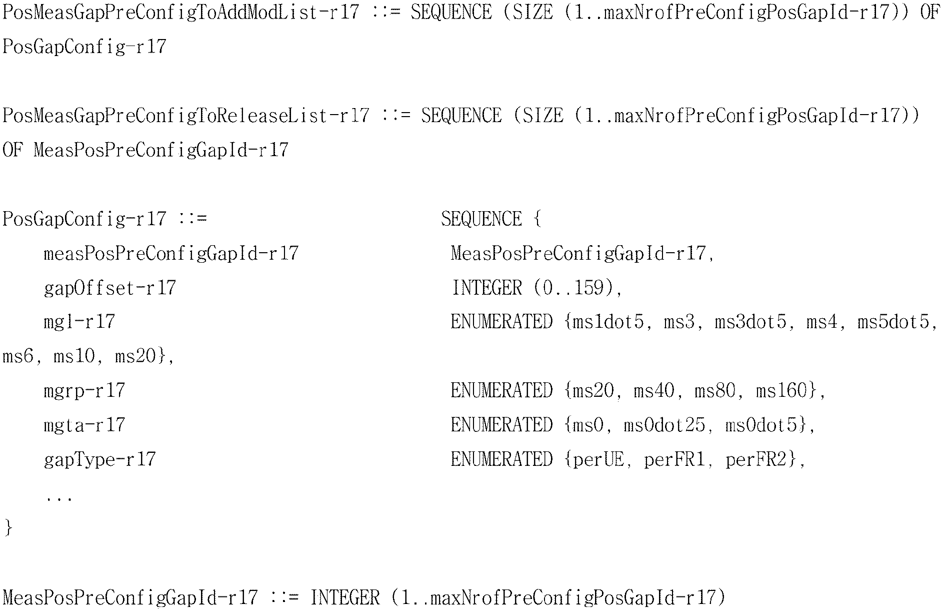

- MUSIM gap configuration information

### - MUSIM-GapConfig

The IE *MUSIM-GapConfig* specifies the MUSIM gap configuration and controls setup/release of MUSIM gaps.

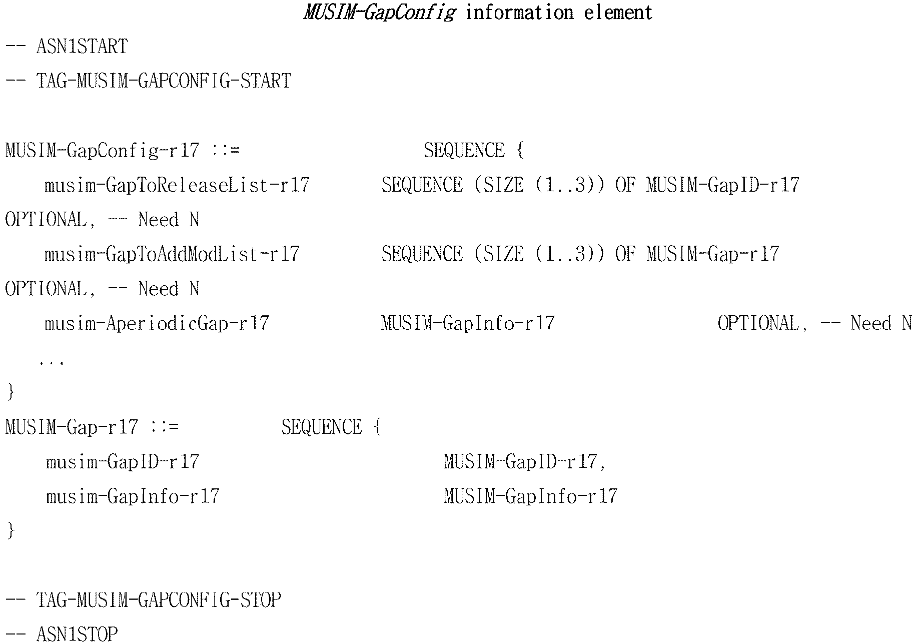

- Gap configuration information used by terminals that support satellite services

### - MeasObjectNR

The IE *MeasObjectNR* specifies information applicable for SS/PBCH block(s) intra/inter-frequency measurements and/or CSI-RS intra/inter-frequency measurements.

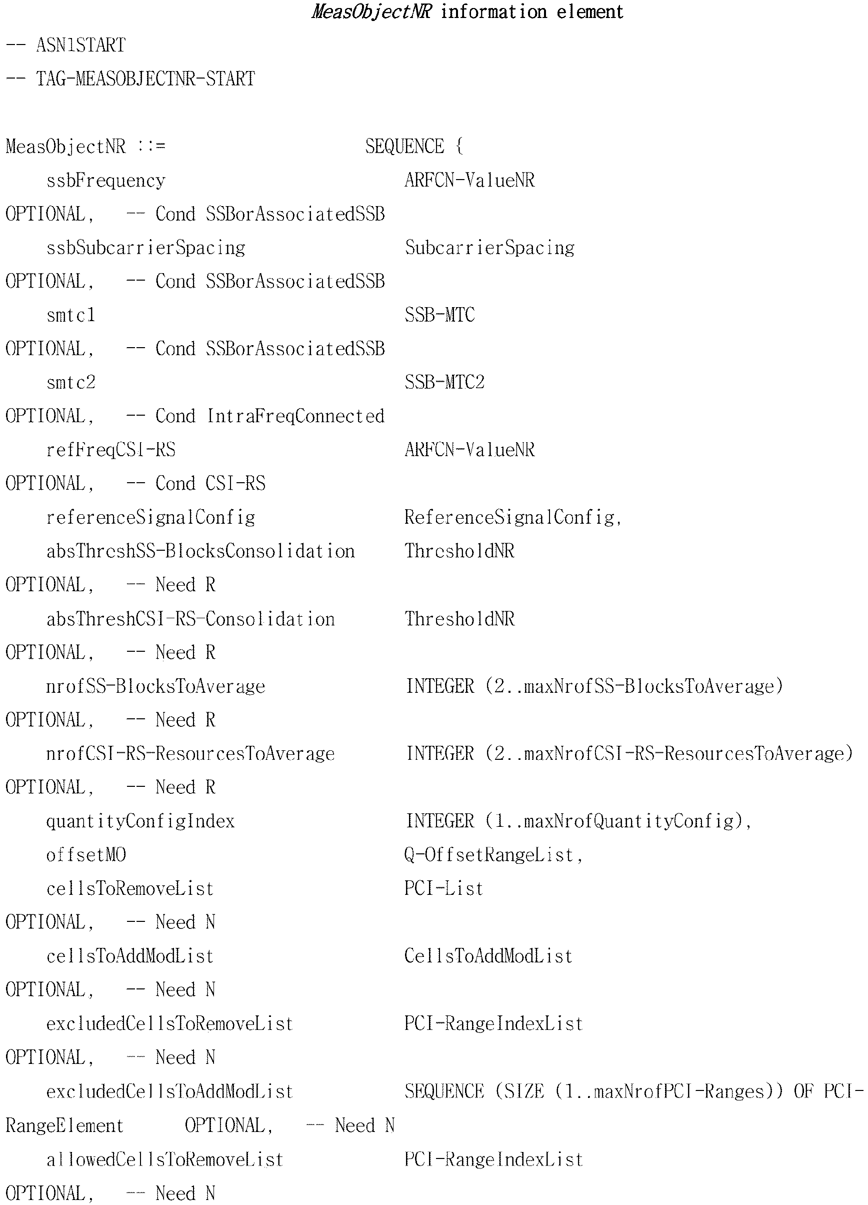

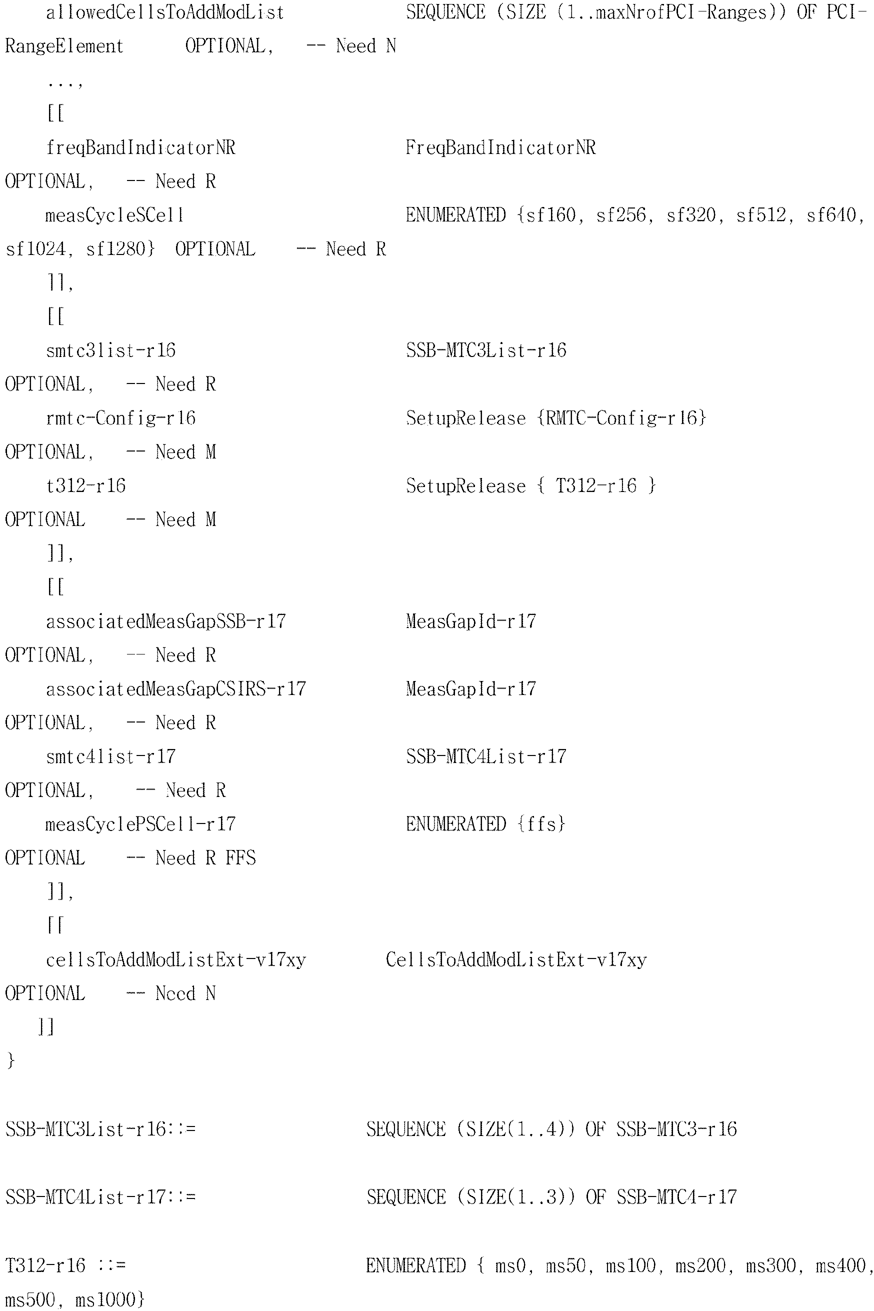

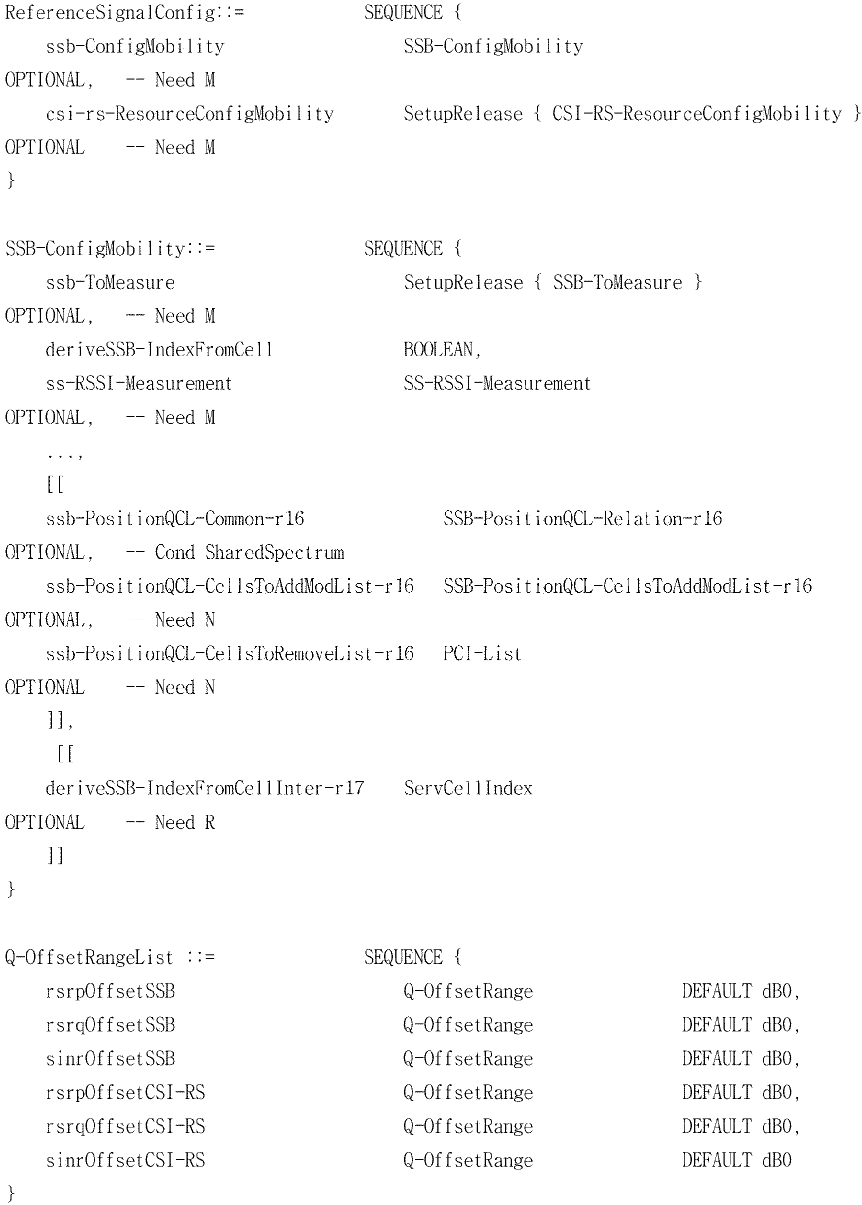

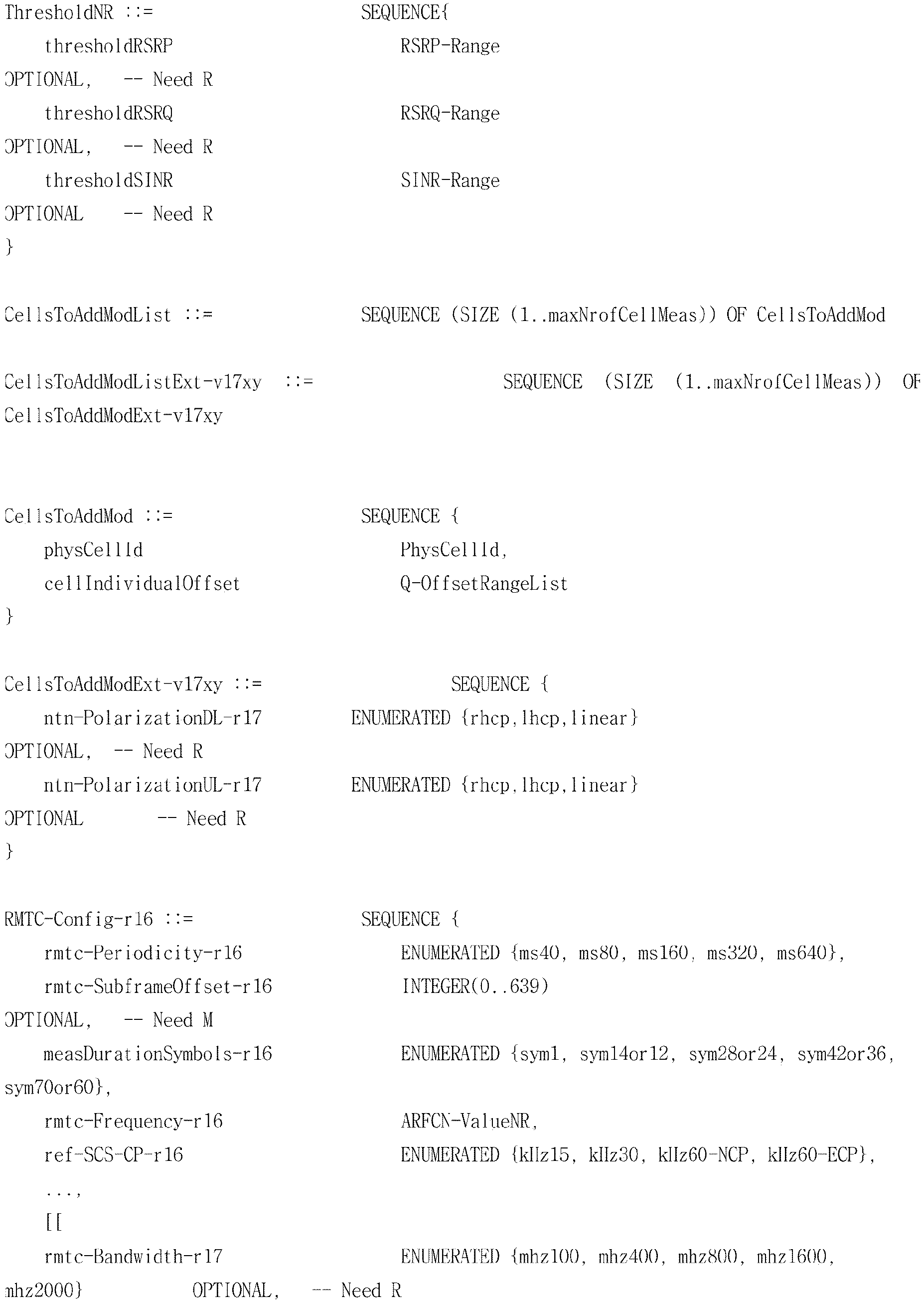

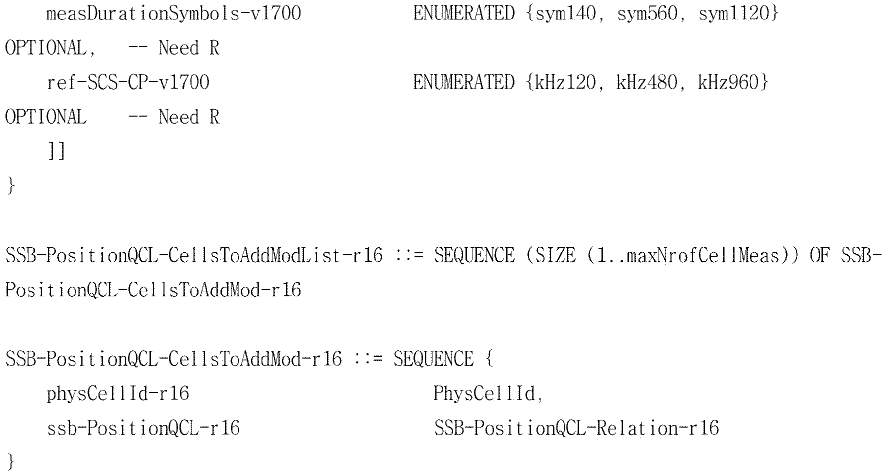

The base station 1j-10 may configure a gap priority value associated with each gap configuration information to the terminal 1j-05.

In an example, the gap priority value may include a value of one of an integer value from 1 to 16. If the gap priority value is not configured in the specific gap configuration information, the terminal may determine that the gap has the lowest priority. The purpose of the gap priority value is to allow the terminal to apply the specific gap configuration information (e.g., with a higher gap priority value, or as instructed by the base station to apply a specific gap) when multiple gaps overlap on the time axis.

The base station 1j-10 may configure a plurality of gap configuration information with the same gap priority value to the terminal 1j-05.

Specifically, the base station 1j-10 may configure the same gap priority value in the plurality of gap configuration information to the terminal only when the plurality of gaps do not overlap in the time axis, or may configure the same gap priority value in the plurality of gap configuration information to the terminal even when the plurality of gaps overlap in the time axis.

In step 1j-30, the terminal 1j-05 may perform an operation according to the gap configuration information received in step 1j-25.

In step 1j-35, the terminal 1j-05 may determine that the plurality of gaps configured by the base station may overlap in the time axis. The terminal 1j-05 may prioritize the gap with the higher gap priority value and perform the operation according to the gap configuration information.

In step 1j-40, the base station 1j-10 may transmit a predetermined RRC message (e.g., RRCReconfiguration) or MAC CE or DCI to instruct the terminal 1j-05 to apply a specific gap. This is for the terminal to perform the gap operation using some gap configuration information when multiple gaps overlap in the time axis.

Specifically, the base station 1j-10 may transmit a predetermined RRC message (e.g., RRCReconfiguration) or MAC CE or DCI to the terminal to apply a specific gap when a plurality of gaps having the same gap priority value overlap in the time axis. Of course, the base station 1j-10 may transmit a predetermined RRC message (e.g., RRCReconfiguration) or MAC CE or DCI to the terminal 1j-05 to use a gap with a lower gap priority when the plurality of gaps overlap in the time axis.

The base station may instruct the terminal to apply a specific gap at a specific time in a one-shot without changing the configured gap priority value, or it may instruct the terminal to apply a specific gap by changing the gap priority value.

In step 1j-45, the terminal 1j-05 may perform an operation according to the gap configuration information indicated by the base station 1j-10 in step 1j-40.

FIG. 1k is a flowchart of the operation of a terminal and a base station to manage a conflict if a plurality of gaps with the same priority exist according to another embodiment of the present disclosure.

With reference to FIG. 1k, in step 1k-15, the terminal 1k-05 may establish an RRC connection with the base station 1k-10 and be in RRC connection mode (1k-15).

In step 1k-20, the terminal (UE) 1k-05 may transmit a UECapabilityInformation message to the base station 1k-10. The message may include at least one of the following:
- Indicator that the same priority may be supported for one or more gap configuration information
- Indicator that when one or more gap configuration information with the same priority overlaps(collides) on the time axis, specific gap configuration information may be applied as a priority according to the instructions of the base station.
- Indicator that when one or more gap configuration information with different priorities collides on the time axis, specific gap configuration information may be applied as a priority according to the instructions of the base station.
- Indicator that may indicate a preference to apply specific gap information with a priority when one or more gap configuration information with the same priority or different priorities overlap on the time axis. This may also be indicated by gap feature. Gap feature refers to the gap capability for each terminal capability, such as MUSIM gap configuration information and position measurement gap configuration information, but does not indicate each gap configuration information.

**In** step 1k-25, the base station 1k-10 may transmit a predetermined RRC message (e.g., RRCResume or RRCReconfiguration) containing one or more gap configuration information to the terminal 1k-05.

The gap configuration information may refer to gap configuration information that may be configured for a terminal, such as measurement gap configuration information, Multi-Universal Subscriber Identity Module (MUSIM) gap configuration information used by a terminal supporting a MUSIM, positioning gap configuration information, non-terrestrial network gap configuration information used by a terminal supporting a satellite service, etc. Of course, the gap configuration information may not be limited to the above gap configuration information mentioned in the present disclosure. The gap configuration information may follow the above-described embodiment.

The base station 1k-10 may configure a gap priority value associated with each gap configuration information to the terminal.

In an example, the gap priority value may include a value of one of an integer value from 1 to 16. If the gap priority value is not configured in the specific gap configuration information, the terminal may determine that the gap has the lowest priority. The purpose of the gap priority value is to allow the terminal to apply the specific gap configuration information (e.g., with a higher gap priority value, or as instructed by the base station to apply a specific gap) when multiple gaps overlap on the time axis.

The base station 1k-10 may configure a plurality of gap configuration information with the same gap priority value to the terminal 1k-05.

Specifically, the base station may configure the same gap priority value in the plurality of gap configuration information to the terminal only when the plurality of gaps do not overlap in the time axis, or may configure the same gap priority value in the plurality of gap configuration information to the terminal even when the plurality of gaps overlap in the time axis.

In step 1k-25, the base station 1k-10 may transmit a predetermined RRC message (for example, RRCResume or RRCReconfiguration) to the terminal 1k-05 to transmit the terminal's preferred gap priority value.

For example, a predetermined RRC message may include otherConfig configuration information. The otherConfig configuration information may include a prohibit timer. The purpose of the prohibit timer is that when the terminal transmits a message containing a preferred gap priority value to the base station, or initiates a procedure to transmit a message containing a preferred gap priority value, the terminal shall trigger the prohibit timer and shall not retransmit the preferred gap priority value until the triggered prohibit timer expires.

In step 1k-30, the terminal 1k-05 may perform an operation according to the gap configuration information received in step 1k-25.

In step 1k-35, the terminal 1k-05 may determine that the plurality of gaps configured by the base station may overlap in the time axis. The terminal 1k-05 may prioritize the gap with the higher gap priority value and perform the operation according to the gap configuration information. If a plurality of gaps with the same gap priority value overlap on the time axis, the terminal 1k-05 may prioritize the gap with a longer gap application period (gap length or gap period) or perform the gap operation by applying one gap sequentially.

In step 1k-40, the terminal 1k-05 may transmit a predetermined RRC message (e.g., UEAssistanceInformation) or MAC CE including a preferred gap priority value for each gap configuration information to the base station 1k-10.

Alternatively, the terminal 1k-05 may transmit to the base station a predetermined RRC message (e.g., UEAssistanceInformation) or MAC CE containing a preference to apply a specific gap when a plurality of gaps having the same gap priority value overlap in the time axis.

Of course, the terminal 1k-05 may also transmit a predetermined RRC message or MAC CE to the base station containing a preference to apply the gap with the lower gap priority value even when a plurality of gaps with different gap priority values overlap in the time axis. For reference, after performing step 1k-40, the terminal may perform the gap operation by immediately prioritizing or applying the specific preferred gap, or it may perform the gap operation according to the configuration of the base station after step 1k-45.

In step 1k-45, the base station 1k-10 may transmit a predetermined RRC message (e.g., RRCReconfiguration) or MAC CE or DCI instructing the terminal to apply a specific gap according to the terminal 1k-05 gap preference received in step 1k-40, or changing the gap priority value per gap configuration information.

In step 1k-50, the terminal 1k-05 may perform an operation according to the gap configuration information indicated by the base station 1k-10 in step 1k-45.

FIG. 1I is a block diagram illustrating the internal structure of a terminal according to an embodiment of the present disclosure.

With reference to the above drawings, the terminal includes a radio frequency (RF) processing unit 11-10, a baseband processing unit 11-20, a storage unit 11-30, and a control unit 11-40.

The RF processing unit 11-10 performs functions for transmitting and receiving signals through a wireless channel, such as band conversion and amplification of signals. That is, the RF processing unit 11-10 upconverts a baseband signal provided from the baseband processing unit 11-20 into an RF band signal and transmits it through an antenna, and downconverts the RF band signal received through the antenna into a baseband signal.

For example, the RF processing unit 11-10 may include a transmission filter, a reception filter, an amplifier, a mixer, an oscillator, a digital to analog converter (DAC), an analog to digital converter (ADC), etc.

In the drawing, only one antenna is shown, but the terminal may be equipped with a plurality of antennas. In addition, the RF processing unit 11-10 may include a plurality of RF chains. Furthermore, the RF processing unit 11-10 may perform beamforming. For the beamforming, the RF processing unit 11-10 may adjust the phase and magnitude of each of the signals transmitted and received through the plurality of antennas or antenna elements. In addition, the RF processing unit may perform MIMO, and may receive multiple layers when performing MIMO operation.

The baseband processing unit 11-20 performs a conversion function between baseband signals and bitstream according to the physical layer standard of the system.

For example, when transmitting data, the baseband processing unit 11-20 generates complex symbols by encoding and modulating the transmission bitstream. In addition, when receiving data, the baseband processing unit 11-20 restores the received bitstream by demodulating and decoding the baseband signal provided from the RF processing unit 11-10.

For example, in the case of following the OFDM (orthogonal frequency division multiplexing) method, when transmitting data, the baseband processing unit 11-20 generates complex symbols by encoding and modulating the transmission bitstream, and transmits the complex symbols to subcarriers. After mapping, OFDM symbols are configured through IFFT (inverse fast Fourier transform) operation and CP (cyclic prefix) insertion. In addition, when receiving data, the baseband processing unit 11-20 divides the baseband signal provided from the RF processing unit 11-10 into OFDM symbols and maps them to subcarriers through fast Fourier transform (FFT). After restoring the received signals, the received bitstream is restored through demodulation and decoding.

The baseband processing unit 11-20 and the RF processing unit 11-10 transmit and receive signals as described above. Accordingly, the baseband processing unit 11-20 and the RF processing unit 11-10 may be referred to as a transmitting unit, a receiving unit, a transceiver, or a communication unit.

Furthermore, at least one of the baseband processing unit 11-20 and the RF processing unit 11-10 may include multiple communication modules to support multiple different radio access technologies.

In addition, at least one of the baseband processing unit 11-20 and the RF processing unit 11-10 may include different communication modules for processing signals in different frequency bands. For example, the different radio access technologies may include a wireless LAN (e.g., IEEE 802.11), a cellular network (e.g., LTE), etc. In addition, the different frequency bands may include a super high frequency (SHF) band (e.g., 2.NRHz, NRhz), and a millimeter wave (mm-wave) band (e.g., 60 GHz), etc.

The storage unit 11-30 stores data such as basic programs, application programs, and configuration information for operation of the terminal. In specific, the storage unit 11-30 may store information related to a second access node that performs wireless communication using a second radio access technology. And the storage unit 11-30 provides stored data according to the request of the control unit 11-40.

The control unit 11-40 controls overall operations of the terminal. For example, the control unit 11-40 transmits and receives signals through the baseband processing unit 11-20 and the RF processing unit 11-10. In addition, the control unit 11-40 writes and reads data into the storage unit 11-30. For this purpose, the control unit 11-40 may include at least one processor. For example, the control unit 11-40 may include a communication processor (CP) that performs control for communication and an application processor (AP) that controls upper layers such as application programs.

FIG. 1m is a block diagram illustrating the structure of a base station according to an embodiment of the present disclosure.

As shown in the drawing, the base station is configured including an RF processing unit 1m-10, a baseband processing unit 1m-20, a backhaul communication unit 1m-30, a storage unit 1m-40, and a control unit 1m-50.

The RF processing unit 1m-10 performs functions for transmitting and receiving signals through a wireless channel, such as band conversion and amplification of signals. That is, the RF processing unit 1m-10 upconverts a baseband signal provided from the baseband processing part 1m-20 into an RF band signal and transmits it through an antenna, and downconverts the RF band signal received through the antenna into a baseband signal.

For example, the RF processing unit 1m-10 may include a transmission filter, a reception filter, an amplifier, a mixer, an oscillator, a DAC, an ADC, etc. In the drawing, only one antenna is shown, but the first access node may be equipped with multiple antennas.

In addition, the RF processing unit 1m-10 may include multiple RF chains. Furthermore, the RF processing unit 1m-10 can perform beamforming.

For the beamforming, the RF processing unit 1m-10 may adjust the phase and size of each signal transmitted and received through a plurality of antennas or antenna elements. The RF processing unit may perform downlink MIMO operation by transmitting one or more layers.

The baseband processing unit 1m-20 performs a conversion function between baseband signals and bitstream according to the physical layer standard of the first radio access technology. For example, when transmitting data, the baseband processing unit 1m-20 generates complex symbols by encoding and modulating the transmission bitstream.

In addition, when receiving data, the baseband processing unit 1m-20 restores the received bitstream by demodulating and decoding the baseband signal provided from the RF processing unit 1m-10. For example, in the case of following the OFDM method, when transmitting data, the baseband processing unit 1m-20 generates complex symbols by encoding and modulating the transmission bitstream, maps the complex symbols to subcarriers, and constitutes the OFDM symbols through IFFT operation and CP insertion.

In addition, when receiving data, the baseband processing unit 1m-20 divides the baseband signal provided from the RF processing unit 1m-10 into OFDM symbols and restores signals mapped to subcarriers through FFT operation. After that, the received bitstream is restored through demodulation and decoding. The baseband processing unit 1m-20 and the RF processing unit 1m-10 transmit and receive signals as described above. Accordingly, the baseband processing unit 1m-20 and the RF processing unit 1m-10 may be referred to as a transmitting unit, a receiving unit, a transceiver, a communication unit, or a wireless communication unit.

The backhaul communication unit 1m-30 provides an interface for performing communication with other nodes in the network. That is, the backhaul communication unit 1m-30 converts a bitstream transmitted from the main base station to another node, e.g., a secondary base station, a core network, etc. into a physical signal, and converts a physical signal received from the other node into a bitstream.

The storage unit 1m-40 stores data such as basic programs, application programs, and configuration information for operation of the main base station. In specific, the storage unit 1m-40 may store information about bearers assigned to the connected terminal, measurement results reported from the connected terminal, etc. In addition, the storage unit 1m-40 may store information that serves as a criterion for determining whether to provide or suspend multiple connections to the terminal. And the storage unit 1m-40 provides stored data according to the request of the control unit 1m-50.

The control unit 1m-50 controls overall operations of the main base station. For example, the control unit 1m-50 transmits and receives signals through the baseband processing unit 1m-20 and the RF processing unit 1m-10 or through the backhaul communication unit 1m-30. In addition, the control unit 1m-50 records and reads data from the storage unit 1m-40. To this end, the control unit 1m-50 may include at least one processor.

The embodiments of the present invention disclosed in this specification and drawings are merely provided as specific examples to easily explain the technical content of the present invention and to facilitate understanding of the present invention, and are not intended to limit the scope of the present invention. It is obvious to those skilled in the art that other modifications based on the technical idea of the present invention can be implemented in addition to the embodiments disclosed herein.

Methods according to embodiments described in the claims or specification of the present invention may be implemented in the form of hardware, software, or a combination of hardware and software.

When implemented as software, a computer-readable storage medium that stores one or more programs (software modules) may be provided. One or more programs stored in a computer-readable storage medium are configured to be executable by one or more processors in an electronic device (configured for execution). One or more programs include instructions that cause the electronic device to execute methods according to embodiments described in the claims or specification of the present invention.

These programs (software modules, software) may be stored in random access memory (RAM), non-volatile memory including flash memory, read-only memory (ROM), electrically erasable programmable read-only memory (EEPROM), magnetic disc storage devices, compact disc-ROM (CD-ROM), digital versatile discs (DVDs) or other forms of optical storage devices, magnetic cassettes. Alternatively, they may be stored in memory constituted of some or all of these. In addition, each of the constituent memories may include multiple copies.

In addition, the program may be stored on an attachable storage device that is accessible through such a communication network as an Internet, an intranet, a local area network (LAN), a wide area network (WAN), or a storage area network (SAN), or any combination thereof. Such a storage device may be accessible to a device performing embodiments of the present invention through an external port. In addition, a separate storage device on a communication network may be accessible to the device performing the embodiments of the present invention.

Meanwhile, the embodiments disclosed in the specification and drawings described above are only provided as specific examples to easily explain the contents of the present invention and aid understanding, and are not intended to limit the scope of the present invention. Therefore, the scope of the present invention should be construed as including all changes or modified forms derived based on the technical idea of the present invention in addition to the embodiments disclosed herein. In addition, each of the above embodiments can be operated in combination with each other as needed.

## Claims

1. A method performed by a terminal in a wireless communication system, the method comprising:
receiving, from a base station, measurement configuration information including a plurality of measurement gaps having overlapping time axis and having the same priority;
determining which of the plurality of measurement gaps to apply; and
performing a measurement operation by applying a determined measurement gap.

2. The method of claim 1, wherein the determining step is configured to comprise:
receiving, from the base station, a first control message instructing to apply a specific gap; and
determining which measurement gap to apply based on the first control message, wherein
the control message comprises at least one of a radio resource control (RRC) message, a downlink control information (DCI), or a media access control (MAC) control element (CE).

3. The method of claim **1,** being featured to comprise transmitting a terminal capability information message including terminal capability information to the base station, wherein
the terminal capability information comprises at least one of:
an indicator indicating whether to be able to support a plurality of measurement gaps having overlapping time axis and having the same priority; or
an indicator indicating that a specific gap information may be applied according to instructions from the base station among the plurality of measurement gaps.

4. The method of claim 1, wherein the determining step is configured to comprise:
transmitting, to the base station, a second control message including a preference for a specific measurement gap among a plurality of measurement gaps having overlapping time axis and having the same priority;
receiving, from the base station, a third control message including information regarding which measurement gap to apply based on the preference; and
determining which measurement gap to apply based on the third control message.

5. The method of claim 1, wherein the determining step is configured to comprise determining to apply a measurement gap having a long gap application period (gap length or gap period), or determining to sequentially apply one measurement gap.

6. A method performed by a base station in a wireless communication system, the method comprising:
generating, to a terminal, measurement configuration information including a plurality of measurement gaps having overlapping time axis and having the same priority;
transmitting measurement configuration information including the plurality of measurement gaps; and
transmitting a fourth control message instructing to apply a specific gap to the terminal.

7. The method of claim 6, being featured that:
the measurement gap is determined based on the fourth control message; and
the control message comprises at least one of a radio resource control (RRC) message, a downlink control information (DCI), or a media access control (MAC) control element (CE).

8. The method of claim 6, being featured to further comprise receiving a terminal capability information message including terminal capability information from the terminal, wherein
the terminal capability information comprises at least one of:
an indicator indicating whether to be able to support a plurality of measurement gaps having overlapping axis and having the same priority; or
an indicator indicating that a specific gap information may be applied according to instructions from the base station among the plurality of measurement gaps.

9. The method of claim 6, further comprising:
receiving, from the terminal, a fifth control message including a preference for a specific measurement gap among a plurality of measurement gaps having overlapping time axis and having the same priority; and
transmitting, to the terminal, a sixth control message including information regarding which measurement gap to apply based on the preference, wherein
the specific measurement gap is determined based on the sixth control message.

10. A terminal in a wireless communication system, the terminal comprising:
a transceiver that transmits and receives signals; and
a control unit, wherein the control unit is configured to:
receive, from the base station, measurement configuration information including a plurality of measurement gaps having overlapping time axis and having the same priority;
determine which of the plurality of measurement gaps to apply;
determine whether to apply the determined measurement gap; and
perform the measurement by applying the gap.

11. The terminal of claim 10, wherein the control unit is configured to:
receive, from the base station, a first control message instructing to apply a specific gap; and
determine which measurement gap to apply based on the first control message, and wherein
the control message is featured to comprise at least one of a radio resource control (RRC) message, a downlink control information (DCI), or a media access control (MAC) control element (CE).

12. The terminal of claim 10, wherein the control unit is configured to:
transmit a terminal capability information message including terminal capability information to the base station;
transmit, to the base station, a second control message including a preference for a specific measurement gap among a plurality of measurement gaps having overlapping time axis and having the same priority;
receive, from the base station, a third control message including information regarding which measurement gap to apply based on the preference; and
determine which measurement gap to apply based on the third control message, or
the control unit is featured to control to determine to apply a measurement gap with a long gap application period (gap length or gap period) or to sequentially apply one measurement gap, wherein
the terminal capability information comprises at least one of:
an indicator indicating whether to be able to support a plurality of measurement gaps having overlapping time axis and having the same priority; or
an indicator indicating that a specific gap information may be applied according to instructions from the base station among the plurality of measurement gaps.

13. A base station in a wireless communication system, the base station comprising:
a transceiver that transmits and receives signals; and
a control unit, wherein
the control unit is configured to:
generate, to the terminal, measurement configuration information including a plurality of measurement gaps having overlapping time axis and having the same priority;
transmit the measurement configuration information including the plurality of measurement gaps to the terminal; and
transmit a fourth control message instructing to apply a specific gap.

14. The base station of claim 13, wherein the specific measurement gap is determined based on the fourth control message and the control message comprises at least one of a radio resource control (RRC) message, a downlink control information (DCI), or a media access control (MAC) control element (CE).

15. The base station of claim 13, being featured that:
the control unit receives, from the terminal, a terminal capability information message including terminal capability information; or
the control unit receives, from the terminal, a second control message including a preference for a specific measurement gap among a plurality of measurement gaps having overlapping time axis and having the same priority, and transmits, to the terminal, a third control message including information regarding which measurement gap to apply, wherein the specific measurement gap is determined based on the third control message, and
the terminal capability information comprises at least one of:
an indicator indicating whether to be able to support a plurality of measurement gaps having overlapping time axis and having the same priority; or
an indicator indicating that a specific gap information may be applied according to instructions from the base station among the plurality of measurement gaps.
